# EUROPEAN PATENT SPECIFICATION

(11) **EP 2 815 228 B1**
(45) Date of publication and mention of the grant of the patent: **05.07.2017**
(21) Application number: 13749832.5
(22) Date of filing: 12.02.2013
(51) Int. Cl.: G01N 21/17, B60S 1/08

(54) **IMAGING UNIT AND METHOD FOR INSTALLING THE SAME**
BILDGEBUNGSEINHEIT UND VERFAHREN ZUR INSTALLATION DAVON
UNITÉ D'IMAGERIE ET PROCÉDÉ POUR SON INSTALLATION

(30) Priority: 13.02.2012 JP 2012028917; 19.12.2012 JP 2012276442
(43) Date of publication of application: 24.12.2014
(73) Proprietor: Ricoh Company, Ltd., Tokyo 143-8555 (JP)
(72) Inventor: ITOH, Izumi, Tokyo 143-8555 (JP); HIRAI, Hideaki, Tokyo 143-8555 (JP); KOBAYASHI, Masanori, Tokyo 143-8555 (JP)
(74) Representative: Schwabe - Sandmair - Marx
(86) International application number: PCT/JP2013/053783
(87) International publication number: WO 2013/122242

(56) References cited:
- DE-A1-102010 023 593
- JP-A- 2007 033 400
- JP-A- 2010 223 685

## Description

### Technical Field

The present invention relates to an imaging unit to capture an image of a predetermined imaging area via a transparent plate-like member and to a method for installing the same.

### Background Art

Japanese Patent No. 4326999 discloses an image processing system as attached matter detector to detect droplets as raindrops and foreign matter as frost or dust on the glass surface of a vehicle, ship, and airplane or on various window glasses of a building. This system projects light from a light source mounted in a vehicle cabin to a windshield and receives the light reflected by the windshield with an image sensor to capture and analyze an image to determine whether or not a foreign matter as raindrops is attached on the windshield. Specifically, it performs edge detection on the image signals of the captured image when the light source turns on, using a Laplasian filter to generate an edge image highlighting the boundary between a raindrops image area and a non-raindrops image area. Then, it conducts generalized Hough transform on the edge image, detects circular image areas, counts the number of these areas, and converts the number into the amount of rain.

The applicant proposed an image unit which captures an image of a forward area of a vehicle via a windshield and an image of raindrops on the outer surface of the windshield in JP 2013-117519 A. This imaging unit is described referring to the drawings in the following.

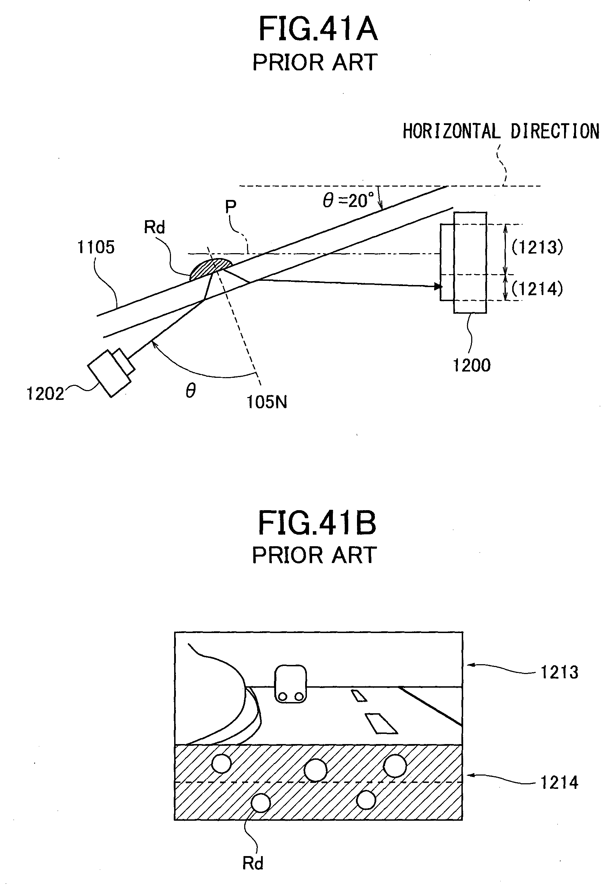

FIG. 41A shows light paths from a light source reflected by a raindrop Rd on a windshield and entering an imaging element 1200 when the windshield is inclined at 20° while FIG. 41B shows an example of captured image data.

The imaging unit includes the imaging element 1200 and a light source 1202 and is installed near the internal surface of a windshield 1105 of a vehicle. The imaging element 1200 is fixed on a vehicle's cabin ceiling, for example, at an appropriate angle so that the optical axis of an imaging lens of the imaging element 1200 aligns with a certain direction relative to a horizontal direction. Thus, a vehicle forward area is properly displayed on an image area for vehicle detection 1213, as shown in FIG. 41B.

In FIG. 41A the light source 1202 is fixed on the internal surface of the windshield 1105, for example, at an appropriate angle so that light therefrom is reflected by the raindrops (specifically, interface between the raindrops Rd and air) on the outer surface thereof and shown in an image area for raindrops detection 1214. Thus, the image of the raindrops Rd on the outer surface of the windshield 1105 is displayed properly on the image area 1214, as shown in FIG. 41B.

In this imaging unit the position of the light source 1202 relative to the imaging element 1200 and the light emitting direction of the light source 1202 are unchanged. Therefore, the imaging unit can be installed easily by placing it so that the imaging element 1200 captures an image in a certain direction P, if the inclination angle θg of the windshield is preset. However, since the inclination angle θg is different depending on a vehicle type, the unit of the imaging element 1200 and light source 1202 can be applied only for a limited type of vehicle.

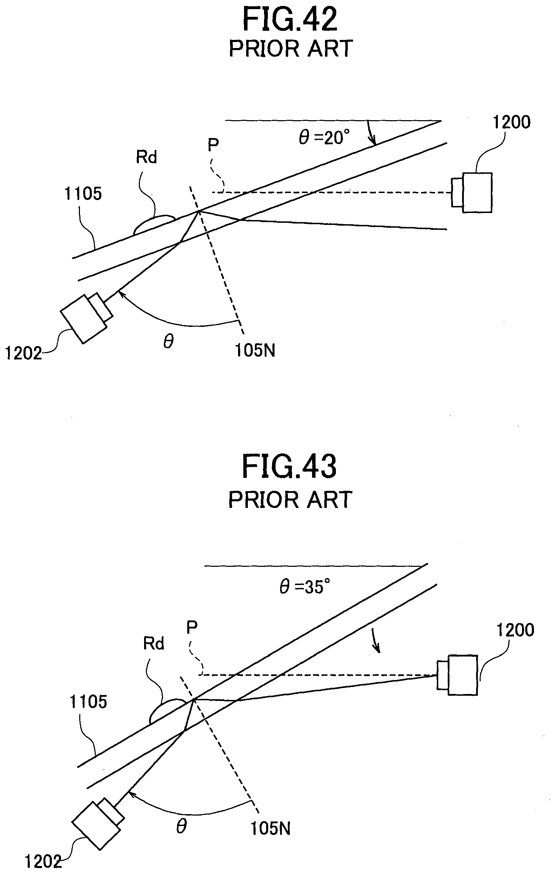

FIG. 42 shows the optical path from the light source reflected by the outer surface of the windshield 1105 when an imaging unit optimized for the windshield inclined at 20 degrees is installed for that 1105 inclined at 20 degrees. FIG. 43 shows the same when the same imaging unit is installed for that 1105 inclined at 35 degrees. A part of the light projected from the light source 1202 is reflected by the internal or outer surface of the windshield 1105. The specular light reflected by the outer surface with high intensity is displayed on the image area 1214 as ambient light, deteriorating the accuracy with which the raindrops Rd are detected. Thus, the angle of the light source 1202 needs to be adjusted to display the light reflected by the raindrops Rd but not to display the specular light reflected by the outer surface of the windshield 1105 on the image area 1214.

The imaging unit in FIG. 42 can be installed simply for the windshield inclined at 20° by placing it so that the imaging element 1200 captures images in a certain direction, so as to prevent the specular light reflected by the outer surface from entering the imaging element 1200. Therefore, it can capture the images ahead of the vehicle in the image area 1213 of the imaging element 1200 as well as the raindrops images in the image area 1214 without noises by the specular light. However, with this imaging unit installed on a vehicle windshield inclined at over 20°, the incidence angle of the light from the light source 1202 on the internal surface of the windshield 1105 is larger than that when the inclination angle of the windshield 1105 is 20°. As a result, the specular light reflected by the outer surface of the windshield 1105 travels more upward than that in FIG. 42 and enters the imaging element 1200.

Next, there is another type of an imaging unit in which the certain direction P of the imaging element 1200 is adjustable with the light source 1202 fixed on the internal surface of the windshield 1105. The installment of the imaging unit is completed simply by adjusting the angle of the imaging element 1200 and fixating the light source 1202 on the internal surface, so as to prevent the specular light by the outer surface from entering the imaging element 1200. With this imaging unit installed on a vehicle windshield inclined at over 20°, the incidence angle θ of the light from the light source 1202 on the internal surface of the windshield 1105 is the same as that when the inclination angle of the windshield 1105 is 20°.

However, this imaging unit has a problem that the light emitting direction of the light source changes in accordance with the inclination angle θg of the windshield 1105. With a change in the inclination angle θg, the traveling direction of the specular light reflected by the outer surface is shifted even at the same incidence angle θ. For example, if the imaging unit is installed on the windshield 1105 inclined at 35° in FIG. 43, the direction of the specular light is shifted upward by 15° as a difference in the inclination angles from FIG. 42. As a result, the specular light is incident on the imaging element 1200.

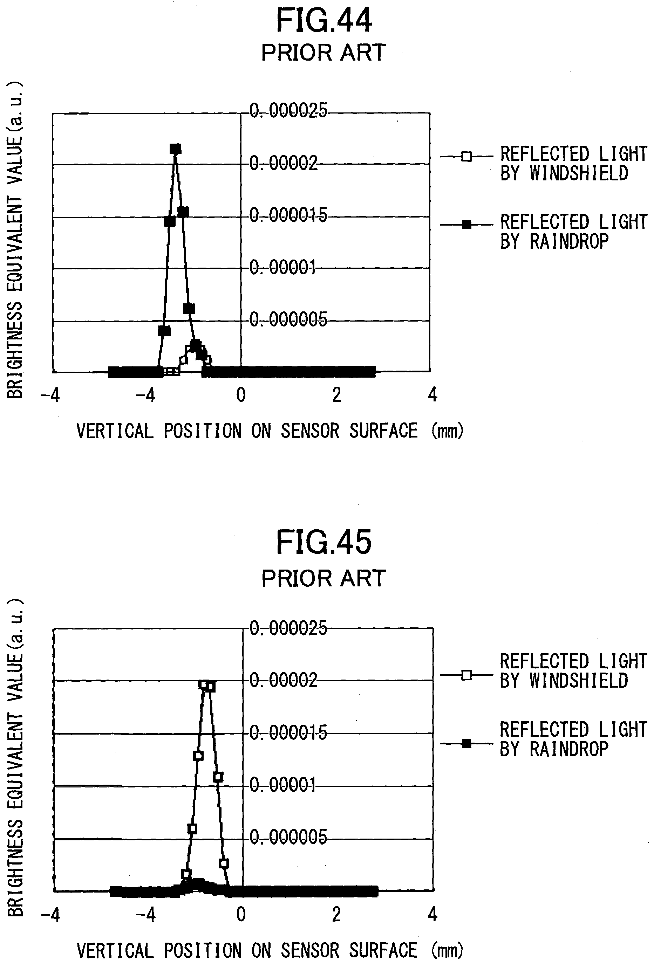

FIG. 44 is a graph showing the amounts of light reflected by the raindrops and the windshield and received by the imaging element 1200 when the specular light by the outer surface of the windshield 1105 is not incident on the imaging element 1200. FIG. 45 is a graph showing the same when the specular light by the outer surface of the windshield 1105 is incident on the imaging element 1200. In FIG. 44 the imaging element 1200 receives only a part of diffuse reflection by the internal and outer surfaces of the windshield 1105 and the amount thereof is much less than the amount of light reflected by the raindrops. Thus, for detecting raindrops, a high S/N ratio can be obtained. Meanwhile, in FIG. 45 the imaging element 1200 receives the specular light with a high intensity as ambient light and the amount thereof is larger than that of the light reflected by the raindrops. Accordingly, a high S/N ratio cannot be obtained for detecting the raindrops.

A high S/N ratio can be acquired to maintain the raindrops detection accuracy as long as the specular light reflected by the windshield does not enter the imaging element 200 even at the inclination angle θg being not 20°. However, in reality the inclination angle range of the windshield 1105 in which the specular light is prevented from entering the imaging element 1200 is very narrow due to the fact that the light from the light source is divergent generally. Because of this, a problem arises that the above-described, installation-easy imaging unit cannot be applied to various windshields in a wide range of inclination angles. Although it is possible to apply the imaging unit to those windshields at different inclination angles by adjusting the position and light emitting direction of the light source 1202 in addition to the angle of the imaging element 1200, it requires additional works for the adjustments of the light source 1202, which hinders the simple installation of the imaging unit.

DE 10 2010 023593 A1 describes a vehicle having an optical device, wherein the optical device is disposed in the interior of the vehicle behind the windshield in the driving direction and detects the exterior, wherein the optical device comprises an image sensor having a surface sensitive to electromagnetic radiation, an objective for projecting electromagnetic radiation onto the sensitive surface of the image sensor, a bifocal optical element for simultaneously focusing an image of a region of the windshield and of a region ahead of the vehicle onto two sub-regions of the sensitive surface of the image sensor, and a mirror element.

### SUMMARY OF THE INVENTION

The invention is defined by the subject-matter of the independent claims. The dependent claims are directed to advantageous embodiments.

### ADVANTAGES OF THE INVENTION

Advantageously, an imaging unit is provided which can capture an image of an imaging area via a transparent plate-like member as a windshield and an image of attached matter as raindrops on the outer surface of the transparent plate-like member, as well as to provide a method for easily and properly installing such an imaging unit so as not to allow specular light by the internal and outer surfaces of the transparent plate-like member in a wide inclination angle range to enter the imaging element.

Advantageously, an imaging unit includes a light source to project a light, an imaging element to receive a light having entered an outer surface of the transparent plate-like member from a predetermined imaging area and transmitted through the transparent plate-like member and a light from the light source reflected by an attached matter on the outer surface of the transparent plate-like member, to capture an image of the predetermined imaging area and an image of the attached matter, a mirror module fixed on the internal surface of the transparent plate-like member to fixedly support a reflective mirror to reflect the light from the light source, an imaging module to fixedly support the light source and the imaging element, fixed relative to the internal surface of the transparent plate-like member so that the imaging element captures an image in a certain direction, and a positioning mechanism to determine relative positions of the mirror module and the imaging module.

### Brief Description of the Drawings

Features, embodiments, and advantages of the present invention will become apparent from the following detailed description with reference to the accompanying drawings:
FIG. 1 schematically shows the structure of an in-vehicle device control system according to one embodiment of the present invention;
FIG. 2 schematically shows the structure of an imaging unit of the in-vehicle device control system;
FIG. 3 shows an example of how to fix an imaging module to a mirror module in the imaging unit;
FIG. 4A shows the optical paths from the light source when the imaging unit is mounted on the windshield at inclination angle of 20° and FIG. 4B shows the same when the windshield is inclined at 35°;
FIG. 5 is a graph showing an example of a diffusion characteristic of the light source of the imaging unit;
FIG. 6 schematically shows the structure of the light source;
FIG. 7 shows an example of the position of a rotational shaft of a rotational coupling mechanism of the imaging unit;
FIG. 8 is a perspective view of an example of the structure of the imaging unit;
FIG. 9 is a perspective view of the imaging unit in FIG. 8 seen at a different angle;
FIG. 10 schematically shows the structure of an imaging element of the imaging unit;
FIG. 11 shows another example of the structure of the light source of the imaging unit;
FIG. 12 shows still another example of the structure of the light source of the imaging unit;
FIG. 13 shows still another example of the structure of a reflective mirror of the imaging unit;
FIG. 14 shows still another example of the structure of the reflective mirror of the imaging unit;
FIG. 15 shows another example of the structure of the reflective mirror of the imaging unit;
FIG. 16 shows an example of the imaging unit with an optical shield;
FIG. 17 shows an example of a downsized reflective mirror;
FIG. 18A shows an example of a raindrops image when an imaging lens is focusing on the raindrops on the outer surface of the windshield and FIG. 18B shows the same when it is focusing on infinity or between infinity and the windshield;
FIG. 19 shows the filer characteristic of a cutoff filter applicable to image data used for raindrops detection;
FIG. 20 shows the filer characteristic of a bandpass filter applicable to image data used for raindrops detection;
FIG. 21 is a front view of a front filter of an optical filter of the imaging element;
FIG. 22 shows an example of image data of the imaging element;
FIG. 23 shows an example of image data when an image area for raindrops detection is set in both the top and bottom portions of a captured image;
FIG. 24 is a front view of the front filter of the optical filer of the imaging element;
FIG. 25 is a graph showing the filter characteristic of an infrared cutoff area of the front filter of the optical filter;
FIG. 26 is an enlarged view of the optical filter and an image sensor seen from a direction orthogonal to a light transmitting direction;
FIG. 27 shows an area division pattern of a polarization layer and a spectral layer of the optical filter;
FIG. 28 shows an example of the layer structure of the optical filter;
FIG. 29 shows another example of the layer structure of the optical filter;
FIG. 30 is a graph showing the spectral filter characteristic of the front filter of the optical filter in FIG. 29;
FIG. 31 is a graph showing the spectral filter characteristic of the spectral layer of a filter for raindrops detection 220B of a rear filter of the optical filter in FIG. 29;
FIG. 32 is a graph showing the spectral characteristic of light transmitting through the filter for raindrops detection 220B;
FIG. 33 is a graph showing another spectral filter characteristic of the spectral layer of the filter for raindrops detection 220B of the rear filter;
FIG. 34 shows image data of each pixel in association with a light receiving amount on each photo diode of the imager sensor through a filter for vehicle detection of the optical filter;
FIG. 35A is a cross section view of the image sensor and filter for vehicle detection of the optical filter along the A to A line in FIG. 34 while FIG. 35B is a cross section view of the same along the B to B line in FIG. 34;
FIG. 36 is a flowchart for vehicle detection;
FIG. 37 shows image data of each pixel in association with a light receiving amount on each photo diode of the imager sensor through the optical filter according to a second embodiment;
FIG. 38A is a cross section view of the image sensor and the optical filter along the A to A line in FIG. 37 while FIG. 38B is a cross section view of the same along the B to B line in FIG. 37;
FIG. 39 shows image data of each pixel in association with a light receiving amount on each photo diode of the imager sensor through the optical filter according to a third embodiment;
FIG. 40A is a cross section view of the image sensor and the optical filter along the A to A line in FIG. 39 while FIG. 40B is a cross section view of the same along the B to B line in FIG. 39;
FIG. 41 A shows the optical paths from the light source reflected by raindrops to the imaging element when a related art imaging unit is mounted on the windshield at inclination angle of 20° and FIG. 4B shows an example of image data captured by the imaging unit;
FIG. 42 shows the optical paths from the light source reflected by the outer surface of the windshield when the imaging unit optimized for a window shield inclined at 20° is installed on a windshield inclined at 20°;
FIG. 43 shows the optical paths from the light source reflected by the outer surface of the windshield when the imaging unit optimized for a windshield inclined at 20° is installed on the windshield inclined at 35°;
FIG. 44 is a graph showing the light receiving amounts of the image sensor relative to light reflected by raindrops and light reflected by the windshield when specular light reflected by the outer surface of the windshield is not incident on the imaging element; and
FIG. 45 is a graph showing the same as in FIG. 44 when specular light reflected by the outer surface of the windshield is incident on the imaging element.

### Description of the Embodiments

Hereinafter, embodiments of the present invention will be described in detail with reference to the accompanying drawings. Wherever possible, the same reference numbers will be used throughout the drawings to refer to the same or like parts.

### First Embodiment

In the following an imaging unit according to a first embodiment is used in an in-vehicle device control system by way of example. The imaging unit is applicable to other systems than the in-vehicle device control system.

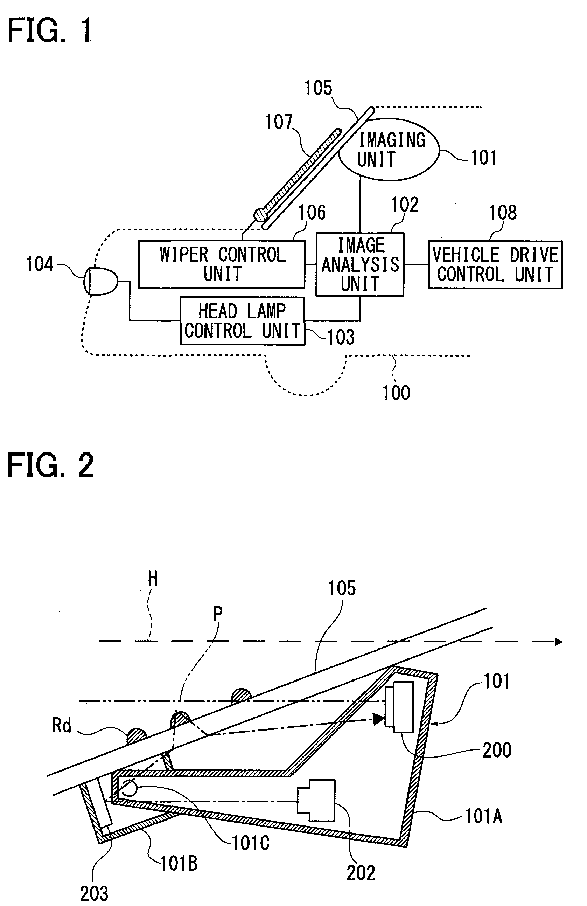

FIG. 1 schematically shows the structure of an in-vehicle device control system according to the first embodiment. The in-vehicle device control system controls light distribution of headlights and operation of windshield wipers and other in-vehicle units, using image data of a vehicle anterior area as an imaging area captured by the imaging unit of a vehicle 100 as automobile.

The in-vehicle device control system includes an imaging unit 101 which is mounted close to a not-shown rearview reflective mirror on a windshield 105 as a transparent plate-like member, for example, to capture an image of a vehicle anterior area in the traveling direction of the vehicle 100. The image data captured by the imaging element of the imaging unit 101 is input to an image analysis unit 102 as an image processor to analyze the image data, calculate the position, direction, and distance of other vehicles ahead of the vehicle 100, or detect foreign matter such as raindrops attached on the windshield 105 or target objects such as the end of a road, white road markings in the imaging area. It detects a preceding vehicle in the traveling direction by identifying the tail lamps of that vehicle and an oncoming vehicle traveling in the opposite direction by identifying the headlights thereof.

The calculation results of the image analysis unit 102 are transmitted to a headlight control unit 103. The headlight control unit 103 generates a control signal for headlights 104 of the vehicle 100 from distance data calculated by the image analysis unit 102, for example. Specifically, it controls the headlights 104 to switch between a high beam and a low beam, or partially shades it, for example, to avoid bright light of the headlights 104 from entering the eyes of a driver of a preceding or oncoming vehicle and maintain a good view of the driver of the vehicle 100.

The calculation results are also sent to a wiper control unit 106 to control a windshield wiper 107 to remove raindrops and foreign matter attached on the windshield 105. It generates a control signal for the windshield wiper 107 in response to a result of detected foreign matter by the image analysis unit 102. Receiving the control signal from the wiper control unit 106, the windshield wiper 107 operates to clear the driver's view.

The calculation results are also sent to a vehicle drive control unit 108. The vehicle drive control unit 108 issues a warning to the vehicle driver and controls a steering wheel or a brake for driving assist on the basis of a result of detected road end or white marking when the vehicle 100 is running off from a traffic lane.

FIG. 2 schematically shows the structure of the imaging unit 101 which includes an imaging element 200, a light source 202, and a reflective mirror 203, and is installed on the internal surface of the windshield 105. The imaging element 200 and light source 202 are fixedly supported in an imaging module 101A while the reflective mirror 203 is fixedly supported in a mirror module 101B. In the present embodiment the light source 202 and reflective mirror 203 are for detecting attached matter, for example, raindrops on the outer surface of the windshield 105.

The imaging module 101A is fixed in the vehicle 100 so that the imaging element 200 can image a predetermined imaging area as vehicle anterior area in a certain direction P (along the optical axis of an imaging lens) irrespective of the inclination angle of the windshield 105. Herein, the inclination angle of the windshield 105 refers to the angle between the internal or outer surface of the windshield 105 and a horizontal direction H in a vertical plane in a vehicle traveling direction, and the certain direction P of the imaging element 200 refers to the direction slightly downward from the vehicle traveling direction.

The mirror module 101B fixedly supports the reflective mirror 203 to reflect the light from the light source 202 of the imaging module 101A to the windshield 105, and is fixed on the internal surface of the windshield 105. The orientation (relative to horizontal direction) of the reflective surface of the reflective mirror 203 is changed in accordance with the inclination angle of the windshield 105. With a change in the inclination angle, the incidence angle of light on the reflective mirror 203 from the light source 202 in the imaging module 101A is changed accordingly.

The imaging module 101A and mirror module 101B are joined via a rotational coupling mechanism 101C. The rotational coupling mechanism 101C includes a rotational shaft extending in a direction orthogonal to the inclination of the windshield 105 (back and forth direction in FIG. 2) and can relatively rotate the imaging module 101A and mirror module 101B around the rotational shaft.

The imaging unit 101 as configured above is installed in the vehicle 100 in the following manner. First, the mirror module 101B is fixed on the windshield 105 by adhesion or engagement using hooks or other parts, for example.

Then, the imaging module 101A is rotated about the rotational coupling mechanism 101C relative to the mirror module 101B to adjust the angle thereof so that the imaging element 200 can capture images in the certain direction P, and then fixed in the vehicle 100. The rotation adjustment range of the rotational coupling mechanism 101A or the angle adjustment range of the imaging module 101A relative to the mirror module 101B is arbitrarily set in accordance with an expected inclination angle range of the windshield 105. In the present embodiment the inclination angle range is assumed to be 20° or more and 35° or less, however, it can be changed properly depending on a vehicle type on which the imaging unit 101 is mounted.

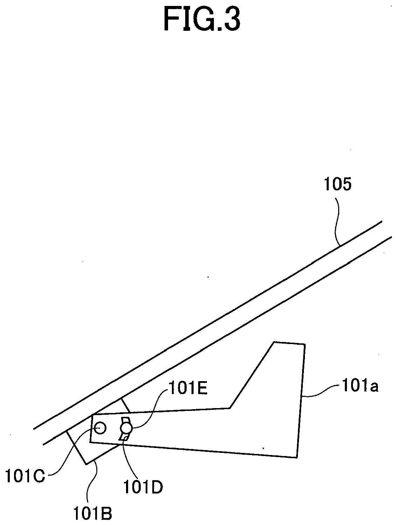

The imaging module 101A and mirror module 101B can be fixed by fastening the imaging module 101A to the housing of the mirror module 101A with bolts provided in the rotational coupling mechanism 101C, for example. Alternatively, they can be fixed by forming in the imaging module 101A a long hole 101D of a partially arc shape around the rotary shaft, forming a hole in the mirror module 101B, and fastening a bolt 101E into the hole of the mirror module 101B through the long hole 101A of the imaging module 101A, as shown in FIG. 3. The length of the long hole 101D is set arbitrarily to one sufficient to adjust the angle range of the imaging module 101A relative to the mirror module 101B.

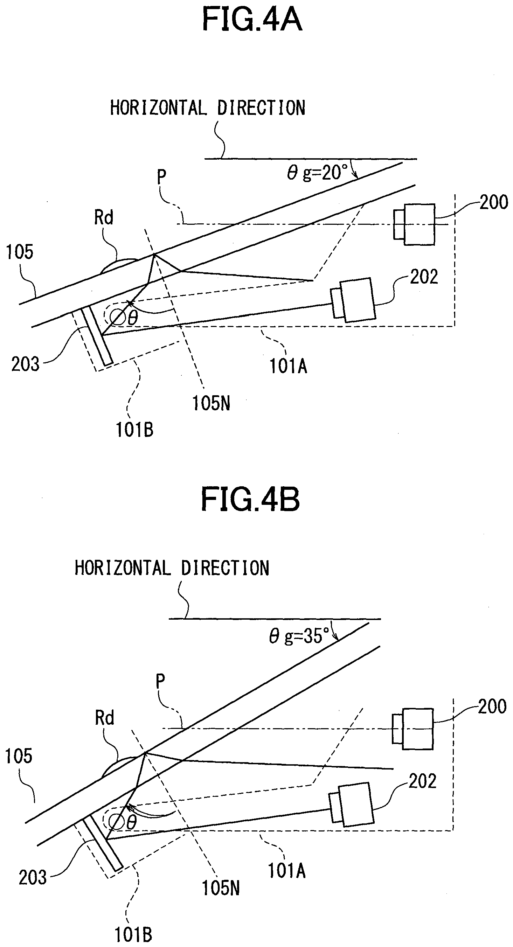

FIG. 4 shows the optical paths from the light source 202 when the imaging unit 101 is installed on the windshield 105 with the inclination angle θg at 20°. FIG. 4B shows the same when the inclination angle θg of the windshield 105 is 35°. The light source 202 is fixed in the imaging module 101A to constantly emit light to the surface of the reflective mirror 203 of the mirror module 101B in the rotation adjustment range of the rotational coupling mechanism 101C. According to the imaging unit 101, the traveling direction of reflected light by the reflective mirror 203 or the direction of incident light on the internal surface of the windshield 105 is constant irrespective of a difference in the inclination angle of the windshield 105. As a result, a direction of light reflected by the raindrops Rd on the outer surface and exited from the internal surface is always constant irrespective of the inclination angle θg of the windshield 105.

However, depending on the position of the rotational shaft of the rotational coupling mechanism 101C, the incidence point of the reflected light from the reflective mirror 203 on the internal surface may be changed by a change in the inclination angle θg In this case the specular light from the outer surface or an interface between the outer surface and air shows, by the change, an amplitude as a change amount of positions of specular light passing through a virtual plane orthogonal to the certain direction P, but this amplitude is marginal and equivalent to the change in the incidence point. According to the present embodiment the specular light is prevented from entering the imaging element 200 as long as the inclination angle of the windshield 105 is within 20° or more and 35° or less.

With no raindrops Rd on the outer surface of the windshield 105, the light reflected by the reflective mirror 203 is reflected by the interface between the outer surface and ambient air but the specular light does not enter the imaging element 200. Meanwhile, with raindrops Rd on the outer surface, a difference in refractive index between the outer surface and raindrops Rd is smaller than that between the outer surface and ambient air. Accordingly, the light from the light source 202 transmits through the interface between the outer surface and ambient air, is incident on the raindrops Rd and reflected by the interface between the raindrops Rd and air. The reflected light by the raindrops Rd enters the imaging element 200. Thus, according to a difference caused by presence or absence of the raindrops Rd, the image analysis unit 102 can detect the raindrops Rd on the windshield 105 from the image data from the imaging element 200.

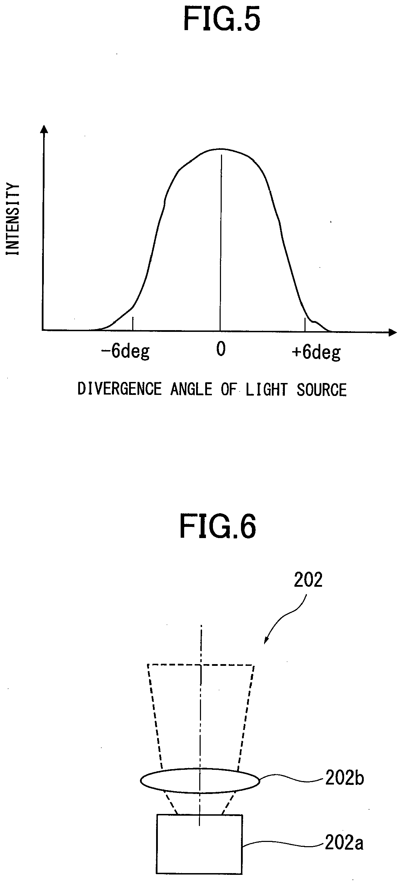

Specifically, the light emitting direction or optical axis of the light source 202 faces downward by 11° from the certain direction P of the imaging element 200 when the imaging element 200 captures an image horizontally, a half angle of view thereof is 14°, and the divergence angle of the light source 202 is ±6° as shown in FIG. 5. The light source 202 in FIG. 6 is comprised of a light emitting portion 202a as LED or semiconductor laser (LD) and a collimate lens 202b. The wavelength of light of the light source 202 can be visible light or infrared light, for example. However, for the purpose of avoiding blinding the drivers of oncoming vehicles or pedestrians, the wavelength range of infrared light longer than visible light and within the sensitivity of the image sensor 206, i.e., 800nm or more and 1,000nm or less is preferable for example. The light source 202 according to the present embodiment is configured to emit light with a wavelength of infrared light.

Further, the angle between the surface of the reflective mirror 203 and a normal line 105N of the internal surface of the windshield 105 is set to 76°. Thus, the specular light exits from the internal surface of the windshield 105 downward by 17° relative to the optical axis of the imaging element 200 or horizontal direction. The exit angle of 17° is constant irrespective of the inclination angle of the windshield 105 and smaller than the divergence angle of the light source 202 in FIG. 5. Accordingly, the specular light reflected by the outer surface is prevented from entering the imaging element 200 as long as the vertical position of the imaging element 200 is below the incidence point of the reflected light by the reflective mirror 203 on the internal surface of the windshield 105.

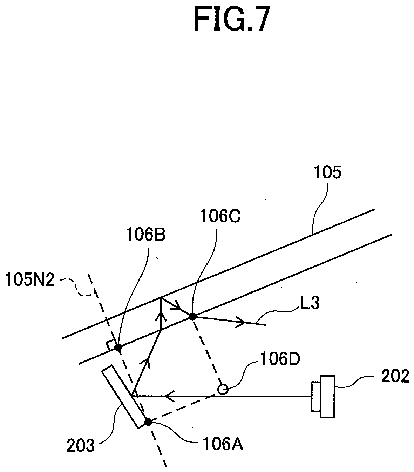

The rotation center of the rotational coupling mechanism 101C is set so that the reflected light is incident on almost the same point of the internal surface when the incidence angle of the windshield 105 is within the range of 20° or more and 35° or less. Specifically, it is preferably included in a rectangular area surrounded by four points 106A to 106D as in FIG. 7. The first point 106A is an end point of the surface of the reflective mirror 203 far from the windshield 105 in a virtual plane orthogonal to the rotational shaft of the rotational coupling mechanism 101C. The second point 106B is an intersection point between the internal surface of the windshield and a normal line 105N2 of the internal surface passing through the first point 106A. The third point 106C is the point furthest from the second point 106B among the exit points of light L3 from the internal surface to the imaging element 200 in the angle adjustment range of the imaging module 101A. The fourth point 106D is a diagonal point of the second point and set to form the apexes of a rectangle with the first to third points. By way of example, preferably, the path of light from the reflective mirror 203 to the internal surface crosses the rotation center of the rotational coupling mechanism 101C, as in FIG. 4.

The imaging unit 101 can be configured that the imaging module 101A, mirror module 101B and windshield 105 are covered with a case. This can prevent the covered area of the windshield 105 from being fogged even when the internal surface is fogged. Further, this can prevent an error in the analysis of the image analysis unit 102 due to fogging of the windshield. The image analysis unit 102 can properly control various operations on the basis of analysis results.

Alternatively, for detecting a fogging of the windshield 105 from image data from the imaging element 200 to control an air conditioning system of the vehicle 100, for example, the portion of the windshield 105 opposing the imaging element 200 does not need to be covered with the case or an airflow path can be formed in the case.

Further, the present embodiment describes an example of using the windshield 105 of the vehicle 100 as the transparent plate-like member where the imaging unit is installed. It should not be limited to such an example. The imaging unit can be installed for a transparent plate-like member of a surveillance system other than a vehicle system.

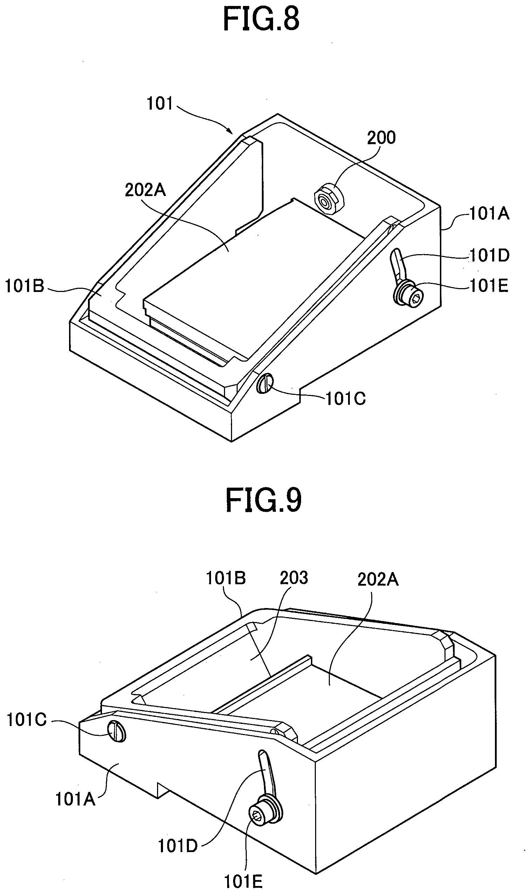

FIG. 8 is a perspective view of another example of the imaging unit according to the present embodiment while FIG. 9 is a perspective view of the same seen from a different angle. In this example the light source 202 includes a not-shown light emitting portion and an optical guide 202A to guide the light from the light emitting portion to the reflective mirror 203. The light emitted from the end of the optical guide 202A is reflected by the reflective mirror 203 of the mirror module 101B to be incident on the internal surface of the windshield 105, reflected by the attached matter on the outer surface and received by the imaging element 200. The mirror module 101B is fixed on the windshield 105 by adhesion or engagement using hooks provided on the windshield 105 or other parts, for example.

This imaging unit is fixed by fastening the bolt 101E into the hole of the mirror module 101B through the long hole 101D of the imaging module 101A, as shown in FIG. 3.

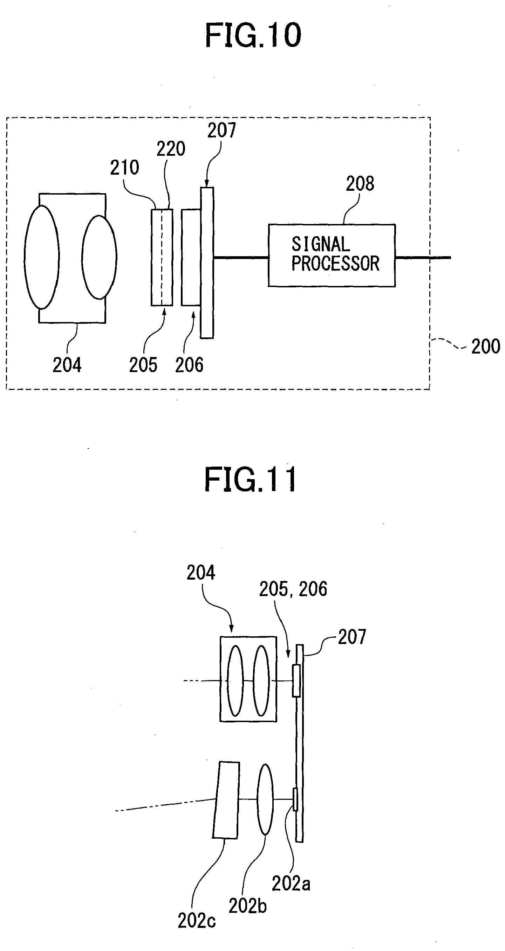

FIG. 10 schematically shows the structure of the imaging element 200 of the imaging unit 101. The imaging element 200 includes an imaging lens 204, an optical filter 205, an image sensor 206 with two-dimensionally arranged pixel arrays, a substrate 207 on which the image sensor 206 is mounted, and a signal processor 208 to convert analog electric signals output from the substrate 207 to digital electric signals and generate image data for outputs.

It is preferable that the light emitting portion 202a of the light source 202 and the image sensor 206 of the imaging element 200 are mounted on the same substrate 207 in terms of cost reduction and a decrease in the number of necessary electric parts and components. Especially, the production process for the imaging unit can be facilitated by setting the optical axis of the light emitting portion 202a and the normal line of the surface of the image sensor 206 to direct at the normal line relative to the substrate surface. However, in the present embodiment it is difficult to place the light emitting portion 202a and the image sensor 206 on the same substrate since the light emitting direction of the light source 202 and the certain direction P of the imaging element 200 are different from each other.

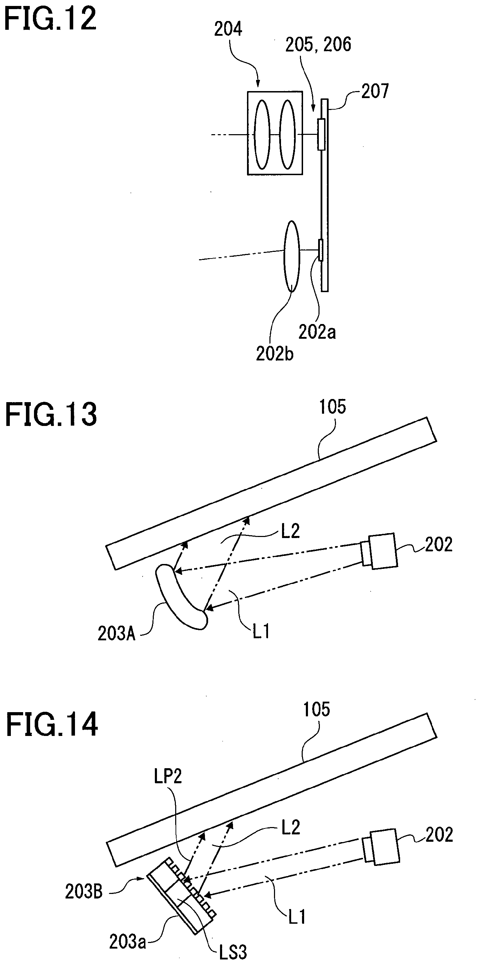

In view of this, the light source 202 can include an optical path changing element to change the optical path from the light emitting portion 202a, for example. Thereby, the same substrate can be used for the light source 202a and the image sensor, reducing the number of electric parts and components. The optical path changing element can be a deflecting prism 202c in FIG. 11 or a collimate lens 202b eccentrically disposed in FIG. 12.

Further, the reflective mirror 203 according to the present embodiment is a plane mirror, however, it can be a concave mirror 203A in FIG. 13. With use of an LED with a relatively large divergence for the light emitting portion 202a, a light L1 from the light source 202 can be diverged by the collimate lens 202b in a long optical path length. If the light emitting portion 202a of the light source 202 and the image sensor 206 of the imaging element 200 are provided on the same substrate 207 as described above, the optical path length from the light source 202 to the reflective mirror 203A is for example several ten mm or over 100mm in some cases, and the light L1 is diverged and spread. If reflected by a planar surface, the light L1 decreases in luminance on the windshield 105. Also, reflected by the internal or outer surface of the windshield 105, a part of such a divergent light is likely to become the specular light entering the imaging element 200, resulting in narrowing the inclination angle range of the windshield 105 to which the unit 101 is applicable. Accordingly, with use of the concave mirror 203A in FIG. 13, it is possible to irradiate the windshield 105 with a light L2 parallelized of the divergent light L1 and prevent a decrease in the luminance on the windshield 105. Also, it is possible to maintain a wide inclination angle range of the windshield 105 to which the imaging unit 101 is applicable and improve the detection of raindrops or attached matter thereon.

Further, the reflective mirror 203 according to the present embodiment can be a polarization mirror or beam splitter 203B in FIG. 14. The light components incident on the outer surface of the windshield 105 are mostly P polarization components while S polarization components are mostly reflected by the internal surface of the windshield 105. By use of the polarization mirror 203B for the reflective mirror 203, P polarization components LP2 can be reflected thereby and S polarization components LS3 can transmit therethrough, for example. Thereby, the P polarization components of the light LP2 can be selectively incident on the windshield 105, reducing the intensity of light reflected by the internal surface of the windshield 105. This makes it possible to prevent the reflected light from entering the imaging element 200, degrading the raindrops detection accuracy.

The polarization mirror 203B in FIG. 14 includes on the rear surface opposite to the reflective surface an optical absorber 203a to absorb the S polarization components having transmitted through the reflective surface. Thereby, the S polarization components are greatly attenuated or disappear. Alternatively, they can be attenuated by another manner, for example, by an optical diffuser with a sand surface in replace of the optical absorber 203a, for example.

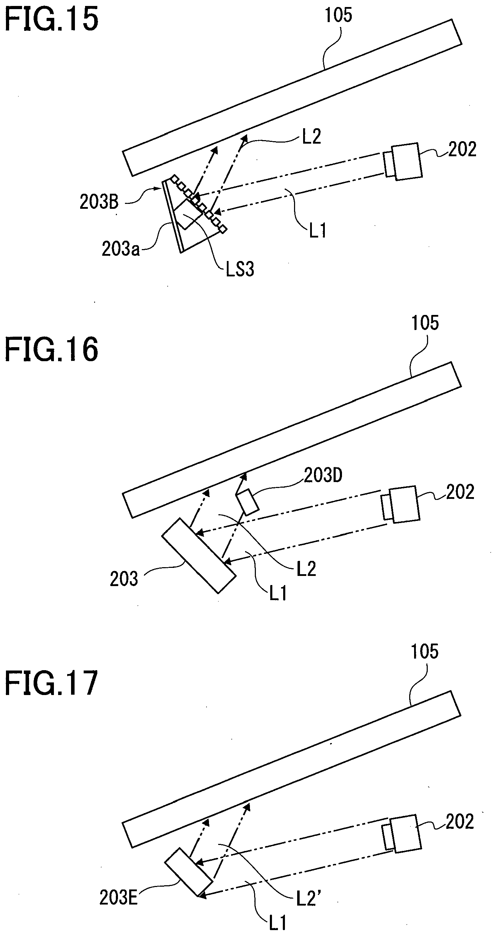

Alternatively, the reflective mirror 203 can be a polarization mirror 203C with a wedged substrate as a rear surface inclined to the reflective surface, as shown in FIG. 15, to prevent a part of S polarization components having transmitted through the reflective surface and reflected by the rear surface from irradiating the windshield 105. The specular light from the part of the S polarization components reflected by the rear surface can be prevented from traveling to the windshield 105, and the S polarization components traveling to the windshield 105 will be only a small portion of diffuse reflection. Thus, it is possible to greatly reduce the intensity of the S polarization components irradiating the windshield 105 and prevent a degradation of the raindrops detection accuracy.

Further, the reflected light by the reflective mirror 203 contains diffuse components. The incidence of diffuse components on the imaging element 200 decreases the raindrops detection accuracy. An optical shield 203D in FIG. 16 can be provided, for example, to prevent the diffuse components from directly entering the imaging element 200 or those being reflected by the internal or outer surface of the windshield 105 from entering the imaging element 200. FIG. 16 shows the optical shield 203D added to the mirror module 101B by way of example. Instead, it can be added to the imaging module 101A. The optical shield 203D added to the mirror module 101B can be disposed near the windshield 105 so that it can exert good shield property for diffuse components independent of the inclination angle of the windshield 105.

Alternatively, a small reflective mirror 203E in FIG. 17 can be provided not to reflect a part of the light L1 from the light source 202, for example. Thereby, it can prevent the diffuse components by the reflective mirror 203 from entering the imaging element 200. In this case, without an additional element as the optical shield 203D, it is able to prevent a decrease in the raindrops detection accuracy due to the diffuse components. Especially, it is effective when the distance between the small reflective mirror 203E and the internal surface of the windshield 105 is short and no additional optical diffusion occurs in the distance.

In the present embodiment the focal point of the imaging lens 204 is set to infinity or between infinity and the outer surface of the windshield 105. This makes it possible to acquire proper information from the image data of the imaging element 200 for detecting the raindrops Rd on the windshield 105 as well as preceding or oncoming vehicles and white road markings.

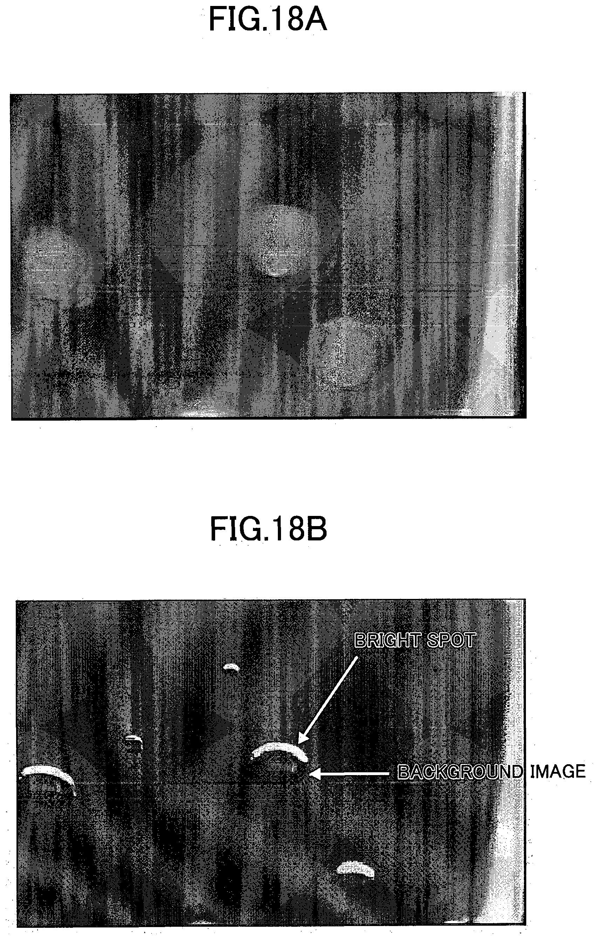

To detect the raindrops Rd on the windshield 105, using a circular shape of raindrops, the shape of an image of a raindrop candidate is recognized by determining whether or not the candidate image on image data is circular. For the shape determination the focal point of the imaging lens 204 should be infinite or between infinity and the windshield 105 to blur the image as shown in FIG. 18B rather than the raindrops Rd on the outer surface of the windshield 105 in FIG. 18A, to realize a higher shape recognition rate and raindrops detection rate.

However, there may be a case where the focal point of the imaging lens 204 should be before infinity. With the focal point being infinite, if a preceding vehicle is driving far ahead, the number of light receiving elements of the image sensor 206 receiving the light of the tail lamps may be only one or so which is not the one to receive the red light of the tail lamps. This results in a failure in identifying the tail lamps and detecting a preceding vehicle. With the imaging lens 204 having a focal point before the infinity, the tail lamps of a preceding vehicle traveling far ahead are out of focus and the light thereof can be therefore received at a larger number of light receiving elements. The accuracy at which the tail lamps and preceding vehicle are detected can be improved accordingly.

In the present embodiment the optical wavelength of the light source 202 of the imaging unit 101 is a wavelength in infrared light range. In particular the wavelength around 940 nm is effective to reduce an influence from ambient light such as direct sunlight. In imaging infrared light from the light source 202 reflected by the raindrops Rd by the imaging element 200, the image sensor 206 of the imaging element 200 receives a large amount of ambient light including infrared light such as sunlight in addition to the infrared light from the light source 202. To distinguish the infrared light from the light source 202 from the ambient light, the light emitting amount of the light source 202 needs to be sufficiently larger than that of the ambient light. However, the use of such a light source 202 is practically very difficult.

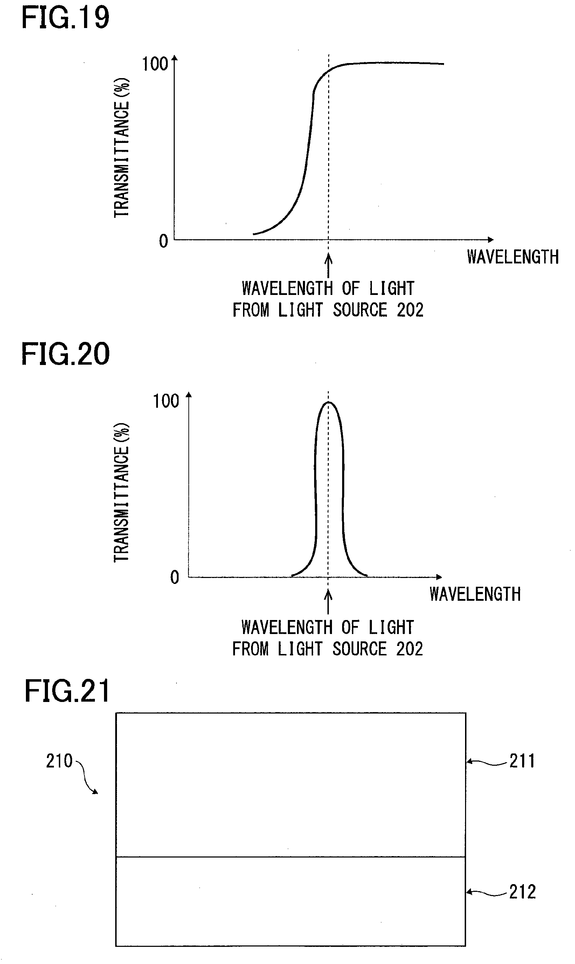

In view of this, it can be configured that the image sensor 206 receives light from the light source 202 via a cut filter to cut off light with a shorter wavelength than the wavelength of light from the light source 202 in FIG. 19 or a bandpass filter with a peak of transmittance almost equal to the wavelength of light of the light source 202 in FIG. 20. Thereby, the light with wavelengths other than that of the light source 202 can be removed so that the light amount from the light source 202 received by the image sensor 206 is relatively larger than the ambient light. Accordingly, the light from the light source 202 can be discriminated from the ambient light without a light source 202 having a very large emission amount.

However, the removed light with wavelengths other than the wavelength of the light source 202 includes light necessary for detecting a preceding or oncoming vehicle or white road markings. Therefore, in the present embodiment the image data is divided into a first image area for vehicle detection and a second image area for raindrops detection on the windshield 105, and the optical filter 205 is provided with a filter to remove light with wavelengths other than the infrared wavelengths of light of the light source 202 only for a portion corresponding to the first image area.

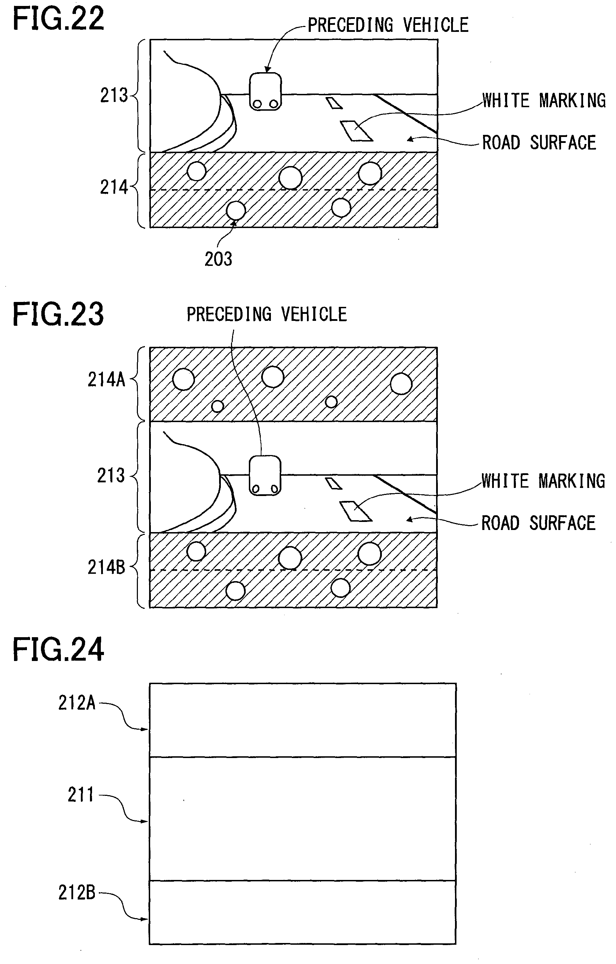

FIG. 21 is a front view of a front filter 210 of the optical filter 205 by way of example. FIG. 22 shows an example of image data. The optical filter 205 is comprised of the front filter 210 and a rear filter 220 superimposed on each other in a light transmitting direction as shown in FIG. 10. The front filter 210 in FIG. 4 is divided into an infrared cut filter area 211 in association with the first image area 213 or two-thirds of image data at top and an infrared transmissive area 212 in association with the second image area 214 or one-third of image data at bottom. The cut filter in FIG. 19 or bandpass filter in FIG. 20 is used for the infrared transmissive area 212.

Generally, the headlights of an oncoming vehicle, the tail lamps of a vehicle ahead, road ends and white markings are present at the center of a captured image while a road surface ahead of the vehicle 100 is present in the bottom of the image. Thus, information needed to identify these things is mostly at the image center, and information in the bottom of an image is not important. For detecting a preceding or oncoming vehicle and road ends or white markings as well as raindrops from the same image data, a captured image is preferably divided as described above and so is the front filter 210 in FIG. 22.

The information in the top of a captured image often contains the sky over the vehicle 100 and is not important for identifying the headlights of an oncoming vehicle, the tail lamps of a vehicle ahead and road ends or white markings. Therefore, the second image area for raindrops detection 214 can be at the top of the image, or two second image areas 214A, 214B can be provided at both the top and bottom of the image in FIG. 23. In the latter, the front filter 210 of the optical filter 205 is divided into the infrared cut filter area 211 in association with the first image area 213 or a half of the image at the center, an infrared transmissive area 212A in association with the second image area 214A or a quarter of the image at the top, and an infrared transmissive area 212B in association with the second image area 214B or a quarter of the image at the bottom, as shown in FIG. 24.

It is preferable to provide two light sources 202 and two reflective mirrors 203 for the two second image areas 214A, 214B. Also, it is possible to use the same light emitting portion 202a for the two light sources 202 and divide the light from the light emitting portion 202a to illuminate the second image areas 214A, 214B.

Further, in the present embodiment the cut filter in FIG. 19 or bandpass filter in FIG. 20 are disposed in a position in association with the bottom of a captured image, so as to remove ambient light from sunlight or the tail lamps of a preceding vehicle reflected by the hood of the vehicle 100 from the second image area 214A, which may be otherwise captured in the bottom of the imaging area. Thus, a degradation of the raindrops detection accuracy can be avoided.

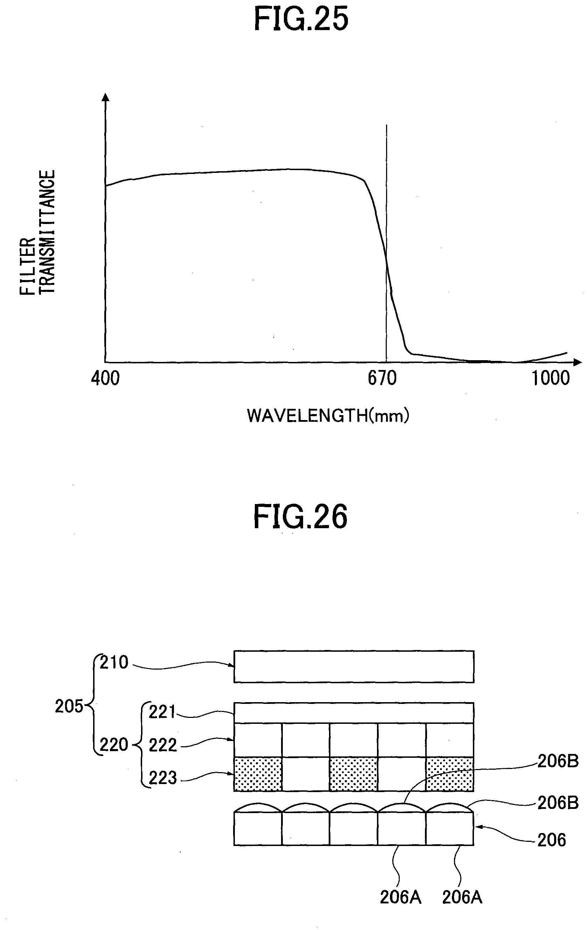

Further, the infrared cut filter area 211 of the front filter 210 corresponds to the first image area 213. This filter area has only to transmit visible light therethrough and can be a non-filter area to transmit light with the entire wavelength range. It is however preferable to cut off infrared wavelengths for the purpose of reducing noise due to incident infrared light from the light source 202. The infrared cut filter area 211 according to the present embodiment owns a shortpass filter characteristic in FIG. 25 to transmit visible light with a wavelength range of 400nm or more and 670nm or less therethrough and cut off infrared light with a wavelength range over 670nm, for example.

Further, a preceding vehicle is detected by identifying the tail lamps from a captured image. The light amount of the tail lamps is less than that of the headlights and contains ambient light as street lamps. It is therefore difficult to accurately detect the tail lamps from brightness data alone and requires spectral data to identify the tail lamps according to the amount of received red light. In view of this, in the present embodiment the rear filter 220 of the optical filter 205 includes a red or cyan filter in accordance with the color of the tail lamps to transmit only light with a wavelength range of the lamp color, to be able to detect the amount of received red light.

Further, the light receiving elements of the image sensor 206 are sensitive to infrared light and an image captured from light including an infrared wavelength range may be reddish as a whole, which hinders the recognition of a red image portion as a tail lamp. In view of this, the front filter 210 of the optical filter 205 includes the infrared cut filter area 211 corresponding to the first image area 213. Accordingly, the infrared wavelength range can be excluded from the image data used for the tail lamp recognition, improving the detection accuracy.

As shown in FIG. 10, light from the imaging area containing a subject or a target object transmits through the imaging lens 204 and the optical filter 205 and is converted into an electric signal in accordance with optical intensity. The signal processor 208 receives the electric signal from the image sensor 206 and outputs as image data a digital signal indicating brightness of each pixel on the image sensor 206 to the succeeding units together with vertical and horizontal synchronous signals.

FIG. 26 is an enlarged view of the optical filter 205 and image sensor 206 seen from a direction orthogonal to the light transmitting direction. The image sensor 206 is a CCD (charge coupled device) or CMOS (complementary metal oxide semiconductor) and the light receiving elements are photo diodes 206A. The photo diodes 206A are two-dimensionally arranged in arrays and micro lenses 206B are disposed on the incidence side of the photo diodes 206A to increase the light collecting efficiency of the photo diodes 206A. The image sensor 206 is bonded on a printed wiring board (PWB) by wire bonding, forming the substrate 207.

The optical filter 205 is disposed near the micro lens 206B of the image sensor 206. The rear filter 220 of the optical filter 205 has a layered structure of a polarization layer 222 and a spectral layer 223 formed on a transparent circuit board 221. The polarization layer 222 and spectral layer 223 are both divided into areas corresponding to the photo diodes 206A.

Although the optical filter 205 and the image sensor 206 can be arranged with a gap, it is preferable to place the optical filter 205 closely to the image sensor 206 so that the boundaries between the areas of the polarization layer 222 and spectral layer 223 coincide with those between the photo diodes 206A of the image sensor 206. The optical filter 205 and image sensor 206 can be bonded with, for example, a UV adhesive or a rectangular area of the image sensor except for an effective pixel area can be thermally compression-bonded or bonded with a UV agent on the optical filter 205 while supported by a spacer.

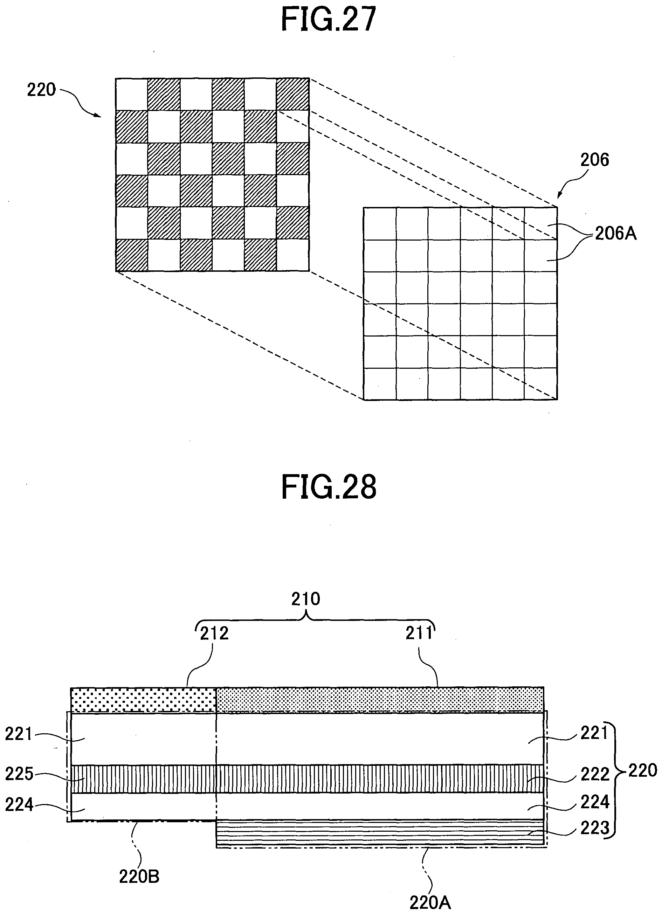

FIG. 27 shows an area division pattern of the polarization layer 222 and spectral layer 223 according to the present embodiment. Each of the polarization layer 222 and spectral layer 223 is divided into first and second areas in line with the photo diodes 206A on the image sensor 206. Thereby, the light receiving amount of each photo diode 206A can be used as polarization data or spectral data in accordance with the type of the area through which the light transmits.

The present embodiment describes an example where the image sensor 206 is a monochrome image sensor. Alternatively, the image sensor 206 can be a color image sensor. With use of a color image sensor, the optical transmittance characteristic of each area of the filters 222 and 223 has to be adjusted in accordance with the characteristic of a color filter attached to each pixel.

An example of the optical filter 205 is described with reference to FIG. 28. FIG. 28 is a cross section view of the layer structure of the optical filter 205 which is used when the second image area 214 corresponds to the bottom of the image. The rear filter 220 of the optical filter 205 includes a first filter for vehicle detection 220A in association with the first image area 213 and a second filter for raindrops detection 220B in association with the second image area 214. The first and second filters are different in structure. The first filter 220A includes the spectral layer 223 but the second filter 220B does not. Also, the first and second filters 220A, 220B have different polarization layers 222, 225, respectively.

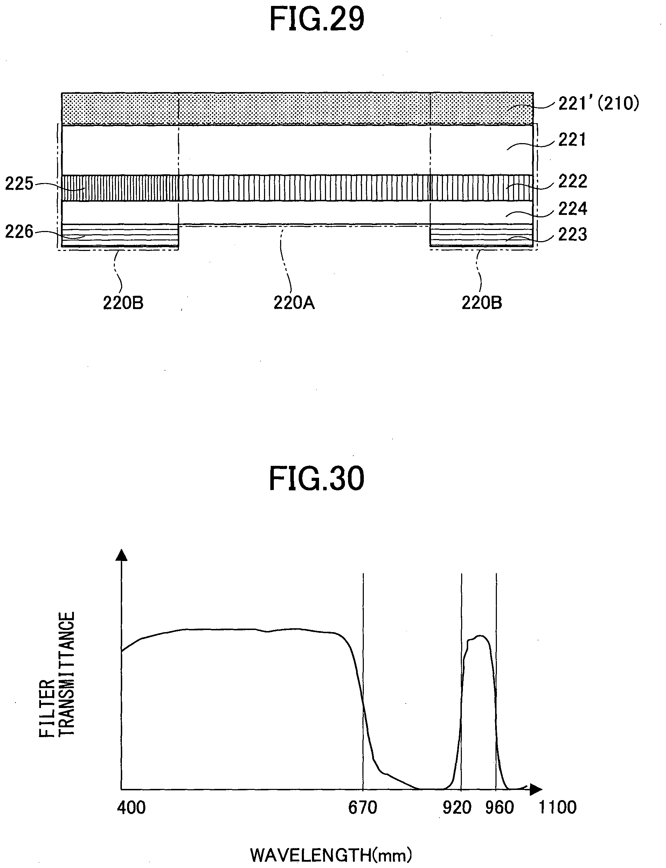

FIG. 29 is a cross section view of another example of the layer structure of the optical filter 205. The optical filter 205 in FIG. 29 is used when the second image area 214 corresponds to both the top and bottom of the image. The front filter 210 thereof includes a same spectral layer 211' corresponding to the first and second image areas 213, 214. The spectral layer 211'can have a filter characteristic to selectively transmit a visible wavelength range of 400nm or more and 670nm or less and infrared wavelength range of 920nm or more and 960nm or less on the premise that the center wavelength of the light source 202 is 940nm and a full width at half maximum is 10nm.

Such a spectral layer 211' can transmit the visible wavelength range for vehicle detection and infrared wavelength range for raindrops detection and cut off the remaining unneeded wavelengths. This can eliminate the necessity for preparing different layers for vehicle detection and raindrops detection. The spectral layer 211' is configured not to transmit light with a wavelength range of 700nm or more and less than 920nm or set to have a transmittance of 5% or less for the purpose of avoiding image data from becoming reddish as a whole and properly extracting a portion including the red color of the tail lamps. Preferably, it is configured not to allow the transmission of the wavelength range of the light source of 920nm or more as shown in FIG. 28. However, the transmittance of this wavelength range does not affect the vehicle detection accuracy since it is much narrower than the visible wavelength range and the image sensor for visible light as CMOS is relatively insensitive to this wavelength range.

The rear filter 220 of the optical filter 205 in FIG. 29 includes a first filter for vehicle detection 220A in association with the first image area 213 and a second filter for raindrops detection 220B in association with the second image area 214. The first and second filters 220A, 220B are different in structure. The first filter 220A includes the spectral layer 226 but the second filter 220B does not. Also, the first and second filters 220A, 220B have different polarization layers 222, 225.

The spectral layer 223 is provided in the first filter 220A to oppose the image sensor 206 (bottom side in the drawing) but the second filter 220B does not include the spectral layer 23. Therefore, it is difficult to fix the optical filter 205 in FIG. 28 and the image sensor 206 in parallel due to a difference in thickness by that of the spectral layer 223. With the inclined optical sensor, optical path length will be different in the top and bottom of the first image area, causing various failures such as a large error in the detection of vehicle periphery information such as the coordinates of white markings.

Meanwhile, the optical filter 205 in FIG. 29 is provided with the spectral layer 226 both at the top and bottom opposing the image sensor 206 (bottom side in the drawing). It is relatively easy to fix the optical filter 205 including the spectral filter 226 at the top and bottom thereof to the image sensor 206 in parallel. In the present embodiment the first and second image areas can be arranged in stripes or checker pattern for the entire image. This makes it easier for the fixation of the optical filter and image sensor in parallel.

Further, with use of the optical filter 205 in FIG. 29 having the first image area for raindrops detection 214 arranged for the top and bottom of the image, the first image area is likely to be larger than that for only either of the top and bottom of the image. This leads to improving the raindrops detection accuracy. Also, arranging the first and second image areas in stripes or checker pattern can increase the image area for raindrops detection and improve the raindrops detection accuracy.

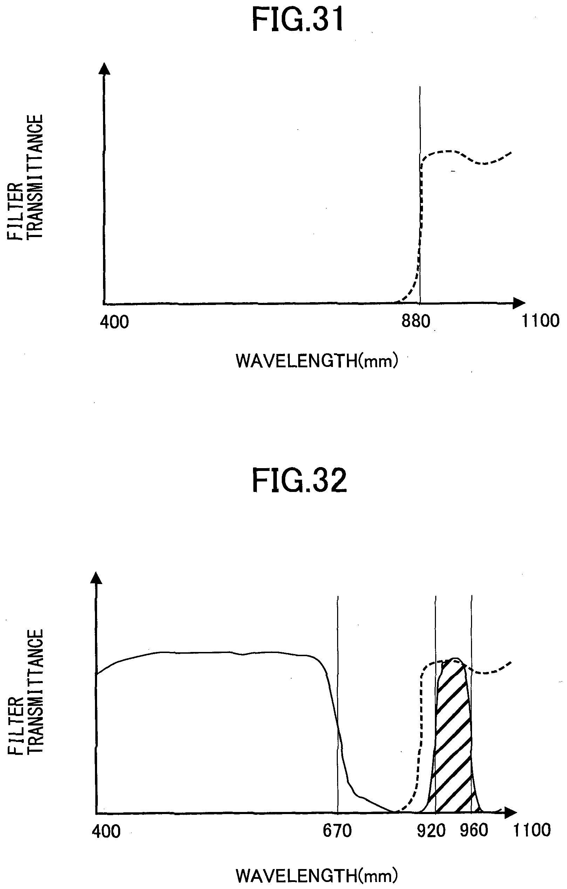

Furthermore, in the optical filter 205 in FIG. 29 the second filter 220B of the rear filter 220 is provided with the spectral layer 226. The spectral layer 226 can be one with a filter characteristic to selectively transmit therethrough an infrared wavelength range of 880nm or more, as shown in FIG. 31, for example. However, since the limit value of the long wavelength of the image sensor 206 is 1,100nm, the infrared wavelength range of light received via the spectral layer 226 is 880nm or more and 1,100nm or less. Moreover, the spectral layer 211' of the front filter 210 limits the wavelength range to 920nm or more and 960nm or less so that only the light with a wavelength of 920nm or more and 960nm or less (hatched portion in FIG. 32) transmits through the spectral layer 226.

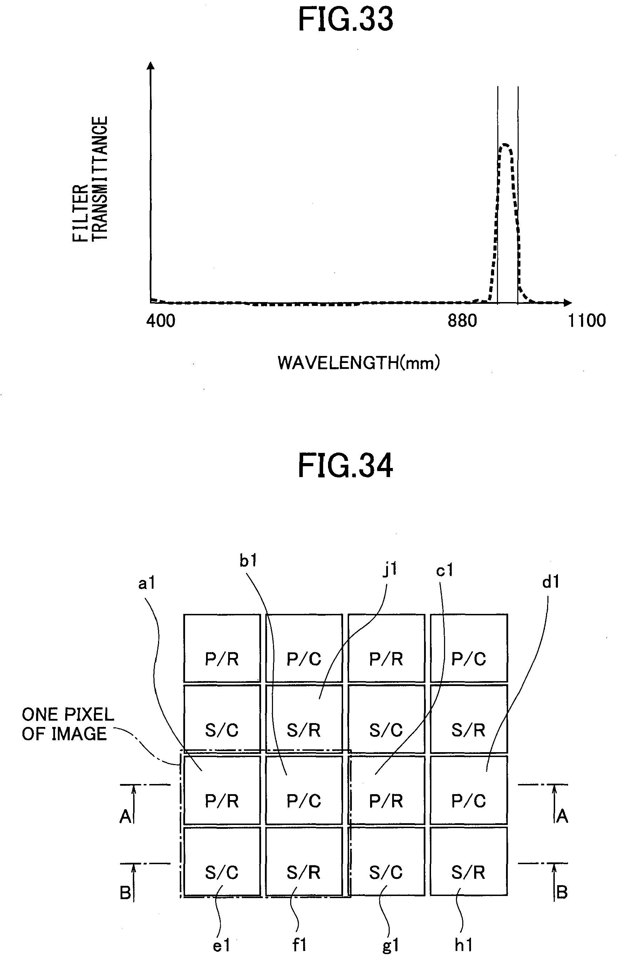

Alternatively, the spectral layer 226 can be one with a filter characteristic to selectively transmit therethrough light in a wavelength range of 925nm or more and 965 or less as shown in FIG. 33, for example. In this case, due to the wavelength range of the spectral layer 211' of the front filter 210, the spectral layer 226 transmits only the light with a wavelength of 925nm or more and 960nm or less therethrough.

As described above, by using the two spectral layers 211', 226, a higher filter characteristic or wavelength selective performance can be achieved than by using a single filter.

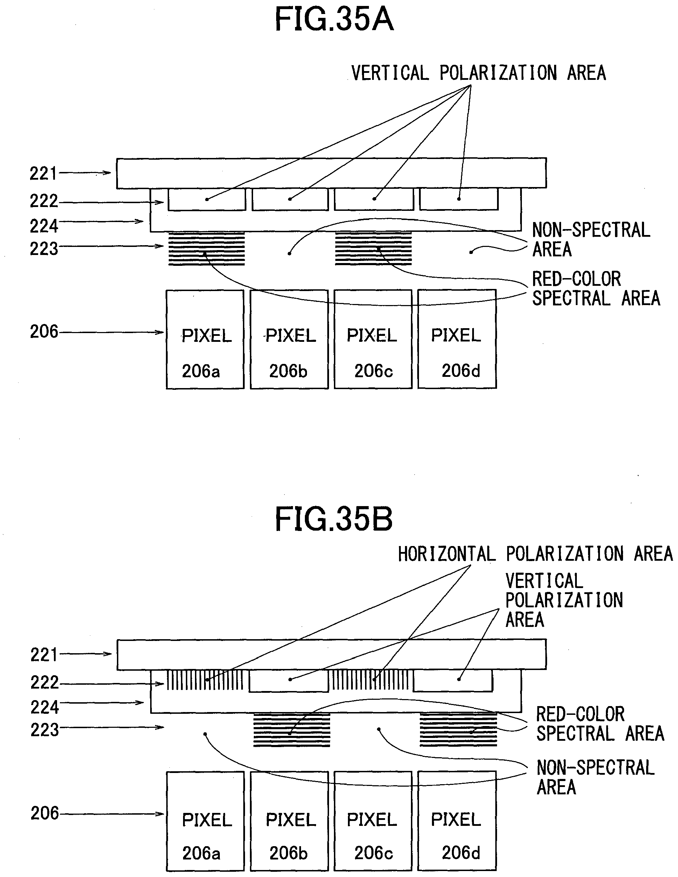

FIG. 34 shows image data on each photo diode 206A of the image sensor 206 in accordance with the amount of light transmitting through the first filter 220A of the optical filter 205. FIG. 35A is a cross section view of the image sensor 206 and first filter 220A of the optical filter 205 along the A to A line in FIG. 34 while FIG. 35B is a cross section view of the same along the B to B line in FIG. 34. In the following the optical filter 205 shown in FIG. 28 is described.

As shown in FIGs. 35A, 35B, the first filter 220A is a layered structure of the polarization layer 222 and spectral layer 223 on the transparent substrate 221. The polarization layer 222 is of a wire grid structure and the top surface (bottom-side surface in FIGs. 35A, 35B) is uneven. To avoid unevenness in the spectral layer 223, the uneven top surface of the polarization layer 222 is filled with a filler to flatten before the formation of the spectral layer 223.

Such a filler can be any material as long as it does not hinder the function of the polarization layer 222, and in the present embodiment a material with no polarizing property is used. Further, to flatten the polarization layer 222, for example, coating the layer with a filler by spin-on glass technology is suitable, but it should not be limited thereto.

The polarization layer 222 includes a first area or vertical polarization area to selectively transmit vertical polarization components alone oscillating in parallel to the vertical pixel arrays of the image sensor 206 and a second area or horizontal polarization layer to selectively transmit horizontal polarization components alone oscillating in parallel to the horizontal pixel arrays of the image sensor 206. The spectral layer 223 includes a first area or red color spectral area to selectively transmit only light with a red wavelength range included in the transmissible wavelength range of the polarization layer 222 and a second area or non-spectral area to transmit light without selecting a wavelength.

According to the present embodiment neighboring four pixels a1, b1, e1, f1, two vertical, two horizontal pixels indicated by a dashed-dotted line in FIG. 34 constitute one pixel of image data. In FIG. 34 a pixel a1 receives a light P/R in the red-color wavelength range R of vertical polarization components P, having transmitted through the first (vertical polarization) area of the polarization layer 222 and the first (red-color spectral area) of the spectral layer 223. A pixel b1 receives a light P/C of non-spectral light C of vertical polarization components P, having transmitted through the first area of the polarization layer 222 and the second (non-spectral) area of the spectral layer 223. A pixel e1 receives a light S/C of non-spectral light C of horizontal polarization components S, having transmitted through the second (horizontal polarization) area of the polarization layer 222 and the second (non-spectral) area of the spectral layer 223. A pixel f1 as the pixel a1 receives a light P/R in the red-color wavelength range R of vertical polarization components P, having transmitted through the first (vertical polarization) area of the polarization layer 222 and the first (red-color spectral area) of the spectral layer 223.

Thus, one pixel of a vertical polarization image of red light is acquired from the output signals of the pixels a1 and f1, one pixel of a vertical polarization image of non-spectral light is acquired from the output signal of the pixel b1, and one pixel of a horizontal polarization image of non-spectral light is acquired from the output signal of the pixel e1. Accordingly, in the present embodiment by a single imaging operation the three types of image data, vertical polarization image of red light, that of non-spectral light, and horizontal polarization image of non-spectral light can be obtained.

The number of pixels of these image data is less than that of a captured image. To generate images with a higher resolution, a known image interpolation processing can be used. For example, to generate a vertical polarization image of red light at a high resolution, the mean value of the pixels a1, c1, f1, surrounding the pixel b1 is calculated and used as data on the vertical polarization component of red light of the pixel b1. Further, to generate a horizontal polarization image of non-spectral light at a higher resolution, regarding the pixels corresponding to the pixels, a1, b1, f1, the mean value of the pixels e1, g1 which receive the horizontal polarization components of non-spectral light around the pixels a1, b1, f1 or the value of the pixel e1 can be used.

The vertical polarization image of red light is for example used for recognizing the tail lamps. By cutting off the horizontal polarization components S, it is made possible to prevent disturbance due to red light of high horizontal polarization components S such as red light reflected by the road surface or from the dashboard of a vehicle cabin, and acquire good red images, resulting in improving the rate at which the tail lamps are identified.

Further, the vertical polarization image of non-spectral light can be used for identifying white road markings or the headlights of an oncoming car, for example. By cutting off the horizontal polarization components S, it is made possible to prevent disturbance due to white light of high horizontal polarization components S from the headlights or the dashboard of a vehicle cabin reflected by the road surface and acquire good non-specular images, resulting in improving the rate at which the headlights and white markings are identified. Especially, it is effective to identify white road markings on a rainy road at a higher rate since reflected light by the water surface on a rainy road includes a large amount of horizontal polarization components.

Further, by use of an index image obtained by comparing the pixel values of the vertical and horizontal polarization images of non-specular light and using a found index value as pixel value, it is made possible to identify with accuracy a metal object or solid object in the image area, a condition, wet or dry, of the road surface, and white road markings on a rainy road. For an index image, used can be a differential image from the difference values of pixels values of vertical and horizontal polarization images of non-specular light, a polarization ratio image from a ratio of the pixel values of these images, or a differential polarization image from the degree of differential polarization of the pixel values of these images relative to the sum of the pixels values, for example.

Not the polarization ratio image but the differential polarization image is used for the index image in the present embodiment for the following reasons. In comparing the polarization ratio image with the differential polarization image, the former becomes close to infinity and therefore inaccurate when a denominator (P polarization component for example) thereof is near zero. Meanwhile, when a denominator as the sum of P and S polarization components is near zero, the latter becomes close to infinity and inaccurate. The latter is more likely to be accurately calculated since it is less probable that the denominator takes a value near zero.

Moreover, the polarization ratio can be accurately calculated when a numerator thereof (S polarization component) is close to zero. Therefore, the polarization ratio image is a suitable index image for detecting the polarization component as a numerator. Meanwhile, regarding the differential polarization degree, the sum of the P and S polarization components is near zero when either of them is near zero, which occurs at the same probability. Thus, the differential polarization image is a suitable index image for detecting the P and S polarization components equally.

In the present embodiment the infrared cut filter area 211 and infrared transmissive area 212 of the front filter 210 have different multi-layered structures. Such a front filter 210 can be manufactured by forming layers of infrared transmissive area 212 by vacuum deposition while masking a portion for the infrared cut filter area 211 and then forming layers of the infrared cut filter area 211 by vacuum deposition while masking the infrared transmissive area 212, for example.

Further, the polarization layer 222 of the first filter 220A and the polarization layer 225 of the second filter 220B have different two-dimensional wire grid structures. The former includes two kinds of areas (horizontal and vertical polarization areas) divided in a unit of pixel with their transmission axes orthogonal to each other. Meanwhile, the latter is composed of one kind of areas divided in a unit of pixel with a transmission axis to transmit only the vertical polarization components P. The two differently structured polarization layers can be easily formed on the same substrate 221 by adjusting the groove direction of a template for patterning metal wires of grid structures to adjust the length of the metal wires of each area of the polarization layers.

Further, the infrared cut filter area 211 can be provided in the imaging lens 204 instead of the optical filter 205. This facilitates the manufacture of the optical filter 205. In replace of the infrared cut filter area 211 of the front filter 210, a spectral layer can be formed in the second filter 220B of the rear filter 220 to transmit only the vertical polarization components P. Further, in the optical filter 205 the rear filter 220 including the polarization layer 222 and spectral layer 223 in FIG. 34 is disposed closer to the image sensor 206. Instead, the front filter 210 can be disposed closer to the image sensor 206 than the rear filter 220.

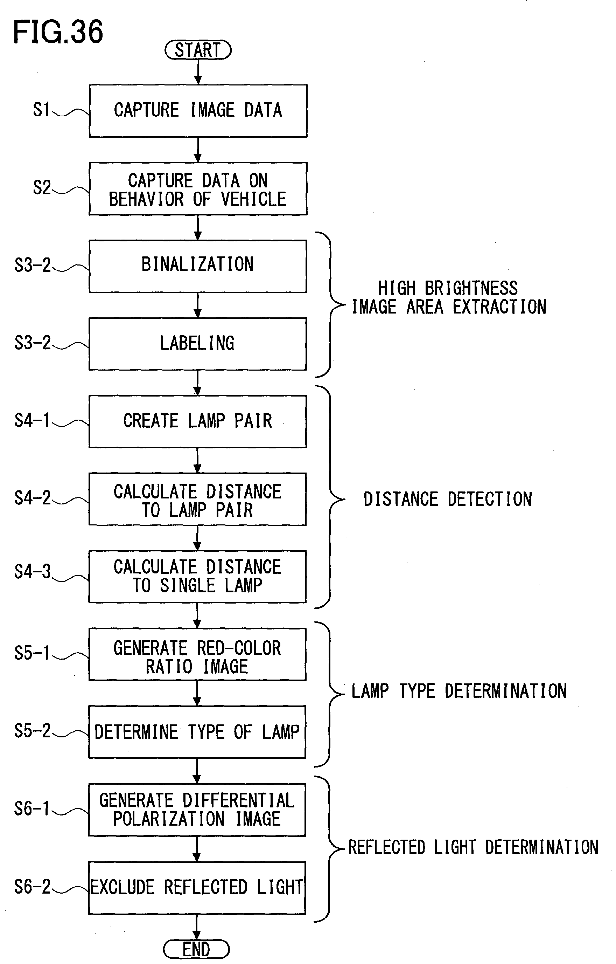

Next, detection of preceding and oncoming vehicles is described. FIG. 36 is a flowchart for vehicle detection according to the present embodiment. In the vehicle detection image data captured by the imaging element 200 is subjected to image processing to extract an image area as a target object. Then, a preceding or oncoming vehicle is detected by identifying the type of a light source appearing in the image area in question.

First, in step S1 image data on the anterior area of the vehicle 100 is captured by the image sensor 206 of the imaging element 200 and sent to the memory. The image data contains a signal indicating brightness of each pixel of the image sensor 206. In step S2 data on the behavior of the vehicle 100 is sent to the memory from a not-shown sensor.

In step S3 a high brightness image area as a target object (tail lamp of a preceding vehicle and headlight of an ongoing vehicle) is extracted from the image data in the memory. The high brightness image area is an area of the image data with a higher brightness than a certain threshold brightness. Image data may contain more than one high brightness areas and all of these areas are extracted. In this step an image area including light reflected by a rainy road is also extracted as a high brightness image area.

In step S3-1 the brightness value of each pixel on the image sensor 206 is binarized according to a certain threshold brightness. Specifically, pixels with a brightness equal to or higher than the certain threshold brightness are assigned with 1 and those with a brightness less than the threshold are assigned with 0. Thereby, a binarized image is generated. Then, in step S3-2 if there are a group of neighboring pixels at 1, they are labeled and extracted as a single high brightness image.

In step S4 a distance between an object in the imaging area corresponding to each extracted high brightness image area and the vehicle 100 is calculated. This process includes a calculation of a distance between the pair of tail lamps or headlights and the vehicle and a calculation of a distance between a single tail lamp or headlight and the vehicle when a preceding or oncoming vehicle goes far and the right and left lamps cannot be distinguished.

In step S4-1 a lamp pair is created. Two high brightness image areas are determined as a pair of lamps when the two areas are approximately the same in height, size and shape in image data captured by the imaging element 200. A high brightness image area with no pair is determined as a single lamp. In step S4-2 a distance to the lamp pair is calculated. The distance between the pair of headlights or tail lamps can be approximated to a constant value w0 (for example, about 1.5m). The focal length f of the imaging element 200 is known so that the actual distance X to the lamp pair can be found by a simple proportion (X = f * w0/w1) where w1 is a distance between the right and left lamps on the image sensor 206 of the imaging element 200. Alternatively, the distance to a preceding or oncoming vehicle can be detected by a dedicated sensor as a laser radar or millimeter-wave radar.

In step S5 the type of lamp, head or tail, is determined. A ratio of a red image of vertical polarization components P and a white image of the same is used as spectral information to determine from the spectral information which one of the headlights or tail lamps the two high brightness image areas are. In step S5-1 for the two high brightness image areas, a red ratio image as index image is generated using a ratio of image data corresponding to the pixels a1, f1 and image data corresponding to the pixel b1 as a pixel value. In step S5-2 the pixel value of the red ratio image is compared with a certain threshold to determine a high brightness image area with a brightness of the certain threshold or more as a tail lamp image area and that with a brightness less than the certain threshold as a headlight image area.

The above-described spectral information is an example of using the ratio of red brightness as the index value. Alternatively, it can be another index value such as a degree of differential polarization, a ratio of the differential values of the pixels values of the red and white images of the vertical polarization components P relative to the sum of the pixel values of these images.

In step S6 for each of the tail lamp and headlight image areas determined, the type of light, direct light from the tail lamp or headlight or reflected light by a reflective mirror surface as rainy road surface is determined from differential polarization degree ((S-P)/(S+P)) as polarization data. In step S6-1 the differential polarization degrees ((S-P)/(S+P)) are calculated for the tail lamp image area and the headlight image area to generate respective differential polarization images using the differential polarization degrees as pixel values. In step S6-2 the pixel values of both of the areas are compared with a certain threshold. The tail lamp and headlight image areas with a pixel value equal to or over the certain threshold is determined as reflected light area, and therefore excluded. After the exclusion, the remaining areas are determined to be the images of the tail lamps of a preceding vehicle or the headlights of an ongoing vehicle.

With a rain sensor mounted in the vehicle, it can be configured that reflected light determination in step S6 is executed only in a rainy condition that light is likely to be reflected by the rainy road surface, for example, when a rainy weather is detected by the rain sensor or when a driver is operating wipers.

The results of detection of the preceding and ongoing vehicles are used for controlling the distribution of light to the headlights of the vehicle 100. Specifically, when the tail lamps are detected in the vehicle detection and the vehicle 100 is approaching to a preceding vehicle in a distance such that the light from the headlight can be incident on the rearview reflective mirror of the preceding car, the headlight control unit 103 shields a part of the headlights or controls the headlights to shift a projection of light vertically or horizontally. Likewise, when the headlights are detected and the vehicle 100 is approaching to an ongoing vehicle in a distance such that the headlight can illuminate the driver of the ongoing vehicle, the headlight control unit 103 shields a part of the headlights or controls the headlights to shift a projection of light vertically or horizontally.

Next, white road marking detection is described. In the present embodiment white road markings are detected for the purpose of avoiding the vehicle 100 from transgressing the driving area. Herein, white road markings refer to all the markings such as solid line, broken line, dot line, double line to lay out roads. Markings of other colors such as yellow are also detectable.

The white markings detection in the present embodiment uses polarization data from the imaging unit 101, for example, differential polarization degree ((S-P)/(S+P)) of white or non-specular, horizontal polarization component S and vertical polarization component P. Reflected light by white markings is mostly of diffusive reflection components in general, and the horizontal and vertical polarization components S, P are almost the same amount so that the differential polarization degree thereof is close to zero. Meanwhile, reflected light by an asphalt surface with no markings is mostly of scattering reflection components when the surface is dry so that the differential polarization degree is a positive value, and when the surface is wet, the reflected light is mostly of mirror surface reflection components so that the differential polarization degree is a larger positive value. Accordingly, a portion of the image area of a road surface with a differential polarization value smaller than a certain threshold is determined to be a white road marking.

Next, raindrops detection is described. In the present embodiment among the image data captured by the imaging element 200, image data in association with the first image area 213 is used for raindrops detection. Reflected light by the raindrops Rd includes vertical polarization components P and exerts high brightness so that the image sensor 206 can receive a large amount thereof through the optical filter 205. Accordingly, a high brightness image area is extracted from the first image area 213 as a candidate for raindrop image area. This extraction is done as in the high brightness image area extraction in step S3.

Further, a raindrop image on image data is mostly circular in shape. A determination is made on whether or not the shape of the extracted candidate image area is circular to identify a raindrop image area. In the present embodiment the raindrop detection is repeatedly performed in unit of 10 continuous images and results of the detection, presence or absence of raindrops, are counted up as count data. The wiper control unit 106 controls the windshield wiper 107 to operate or blow a washer fluid when the count data satisfies a certain condition that 10 positive results are counted continuously, for example.

### Second Embodiment

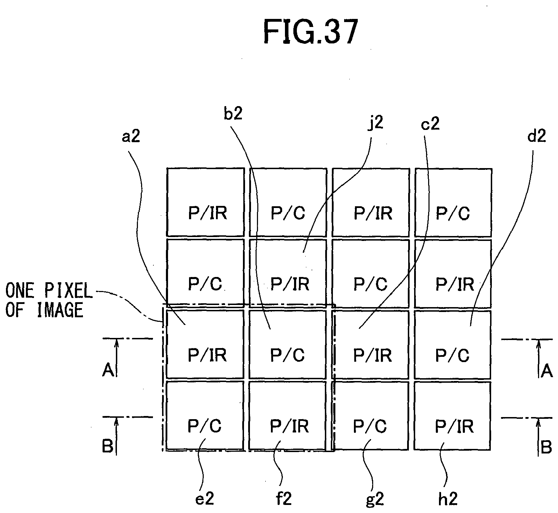

Next, another example of the optical filter 205 is described. FIG. 37 shows image data of each image pixel in association with a light receiving amount on each photo diode 206A of the imager sensor 206 through the optical filter 205.

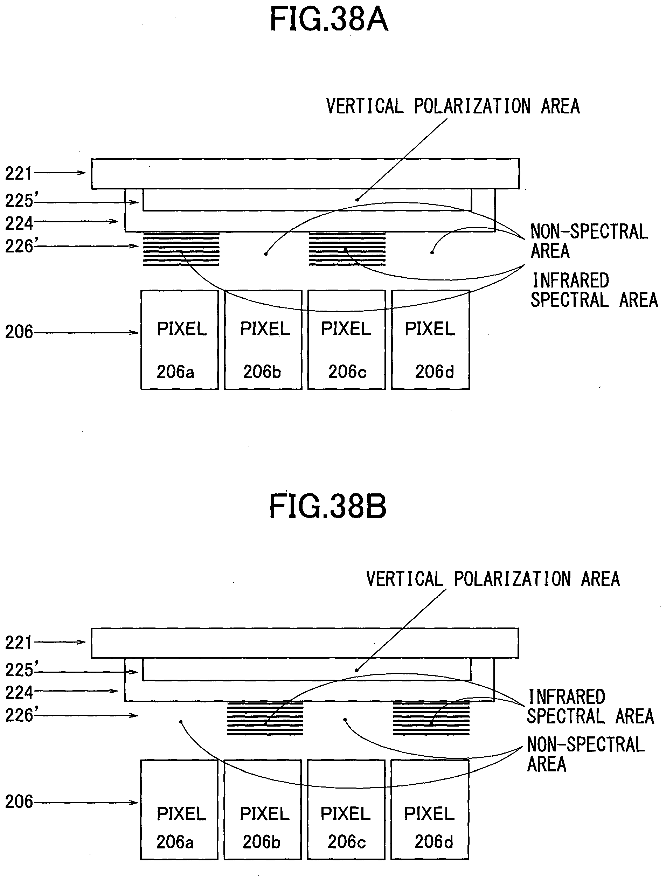

FIG. 38A is a cross section view of the image sensor 206 and the optical filter 205 along the A to A line in FIG. 37 while FIG. 38B is a cross section view of the same along the B to B line in FIG. 37. This optical filter 205 is divided into areas for vehicle detection and for raindrops detection in a checker pattern arranged for the entire captured image.

A polarization layer 225' is a vertical polarization area to selectively transmit vertical polarization components alone to the entire image sensor 206. A spectral layer 226' includes a first area or infrared spectral area to selectively transmit light in an infrared wavelength range alone included in the transmissible wavelength range of the polarization layer 225' and a second area or a non-spectral area to transmit light without selecting a wavelength.

According to the second embodiment neighboring four pixels a2, b2, e2, f2, two vertical, two horizontal pixels indicated by a dashed-dotted line in FIG. 37 constitute one pixel of image data. In FIG. 37 pixels a2, f2 receives a light P/IR of the vertical polarization components P in the infrared wavelength range IR, having transmitted through the polarization layer 225' and the first area or infrared spectral area of the spectral layer 226'. Pixels b2, e2 receive a light P/C of a non-spectral light C of the vertical polarization components P, having transmitted through the polarization layer 225' and the second area or non-spectral area of the spectral layer 226'.

Thus, one pixel of a vertical polarization image of infrared light is acquired from the output signals of the pixels a2 and f2 and one pixel of a non-spectral, vertical polarization image is acquired from the output signal of the pixels b2, e2. Accordingly, in this example by a single imaging operation two types of image data, vertical polarization image of infrared light and that of non-spectral light can be obtained. The number of pixels of these image data is less than that of a captured image. To generate images with a higher resolution, a known image interpolation processing can be used.

This vertical polarization image of infrared light can be used for the raindrops detection as in the first embodiment. Also, the vertical polarization image of non-spectral light can be used for identifying white markings or the headlights of an ongoing vehicle as in the first embodiment.

### Third Embodiment

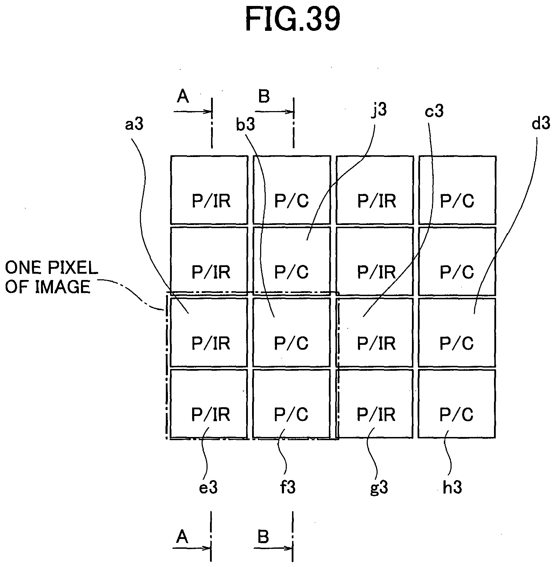

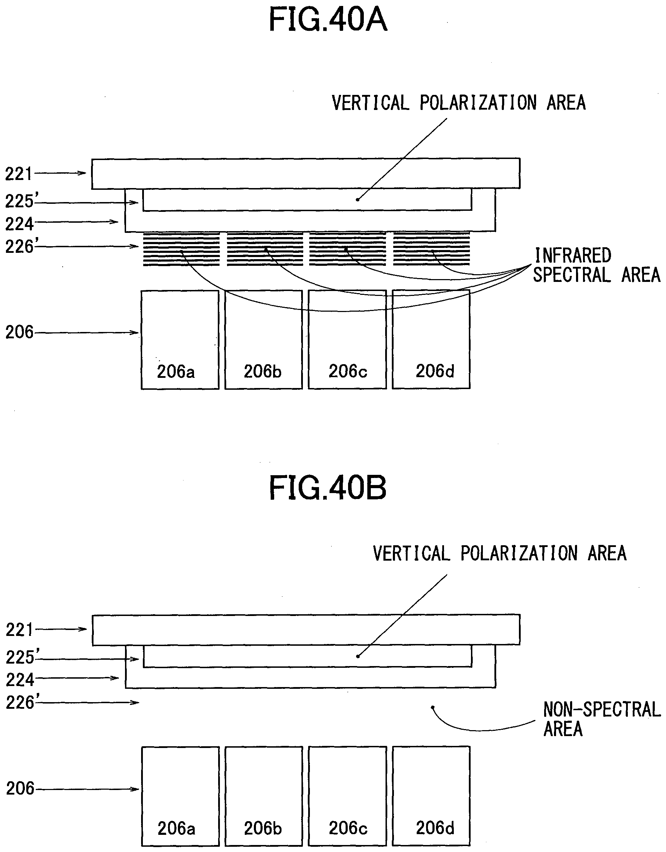

Still another example of the optical filter 205 is described. FIG. 39 shows image data of each image pixel in association with a light receiving amount on each photo diode 206A of the imager sensor 206 through the optical filter 205 according to a third embodiment. FIG. 40A is a cross section view of the image sensor 206 and the optical filter 205 along the A to A line in FIG. 39 while FIG. 40B is a cross section view of the same along the B to B line in FIG. 39. This optical filter 205 is divided into areas for vehicle detection and for raindrops detection in stripes arranged for the entire captured image.

As in the second embodiment, the polarization layer 225' is a vertical polarization area to selectively transmit vertical polarization components P alone to the entire image sensor 206. The spectral layer 226' includes a first area or infrared spectral area to selectively transmit light in an infrared wavelength range alone included in the transmissible wavelength range of the polarization layer 225' and a second area or a non-spectral area to transmit light without selecting a wavelength.

According to the third embodiment neighboring four pixels a3, b3, e3, f3, two vertical, two horizontal pixels indicated by a dashed-dotted line in FIG. 39 constitute one pixel of image data. In FIG. 39 pixels a3, e3 receive a light P/IR of the vertical polarization components P in the infrared wavelength range IR, having transmitted through the polarization layer 225' and the first area or infrared spectral area of the spectral layer 226'. Pixels b3, f3 receive a light P/C of a non-spectral light C of the vertical polarization components P, having transmitted through the polarization layer 225' and the second area or non-spectral of the spectral layer 226'.

Thus, one pixel of a vertical polarization image of infrared light is acquired from the output signals of the pixels a3 and e3 and one pixel of a vertical polarization image of non-spectral light is acquired from the output signal of the pixels b3, f3. Accordingly, in the third embodiment by a single imaging operation two types of image data, vertical polarization image of infrared light and that of non-spectral light can be obtained. The number of pixels of these image data is less than that of a captured image. To generate images with a higher resolution, a known image interpolation processing can be performed.

This vertical polarization image of infrared light can be used for the raindrops detection as in the first embodiment. Also, the vertical polarization image of non-spectral light can be used for identifying white markings or the headlights of an ongoing vehicle as in the first embodiment.

In comparison with the optical filter divided into areas in a checker pattern, the optical filter 205 according to the present embodiment can reduce a displacement of the relative positions of each pixel of the image sensor 206 and each area of the optical filter 205. That is, in the checker pattern the relative positions of each pixel and each area need to be adjusted vertically and horizontally while in the stripe pattern only horizontal adjustment is needed. Thus, it is made possible to shorten the assembly time in manufacturing process and simplify the structure of an assembly device. Note that a direction of the stripes is preferably parallel to a virtual plane (vertical plane in the present embodiment) including a projecting direction of the light source 202 and an imaging direction of the imaging element 200. In this case reflected light by any raindrop in the vertical direction of an image is captured. The optical filter in a vertical stripe pattern exerts an improved resolution for infrared data in the vertical direction, contributing an improvement of raindrops detection accuracy.

The mirror module and imaging module can be positioned by any arbitrary positioning mechanism other than the coupling mechanism. Therefore, the imaging module can be joined with not the mirror module but another element such as a transparent plate-like member or a vehicle's inner wall portion with a transparent plate-like member.

According to one embodiment of the present invention, it is easy to install the imaging unit simply by fixing the mirror module on the internal surface of the transparent plate-like member and fixing the imaging module so that the imaging element can capture an image in the certain direction. The relative position of the two modules is determined by the rotary coupling mechanism. Accordingly, the elements provided in the two modules as the light source, reflective mirror, and imaging element and the optical path from the light source through the reflective mirror to the incidence surface are positioned properly. The position adjustment and fixation of these modules can be facilitated.

Further, to install the imaging unit for a transparent plate-like member with a different inclination angle, it is unnecessary to adjust the position and light emitting direction of the light source and the position and orientation of the reflective mirror.

Further, before the installation, the imaging unit is adjusted so that the imaging element captures images in the same direction irrespective of the inclination angle of the transparent plate-like member. So is the light source fixed in the imaging module together with the imaging element. Further, even with the transparent plate-like member inclined at a different angle, the orientation of light reflected by the reflective mirror to the internal surface of the transparent plate-like member or the exit direction of the specular light from the internal or outer surface thereof is constant. Accordingly, the amplitude of the specular light due to a change in the inclination angle of the transparent plate-like member can be reduced to almost zero. Thus, the specular light reflected by the inner or outer surface can be prevented from entering the imaging element.

Further, even with a shift in the incidence point of the light on the internal surface of the transparent plate-like member, the amplitude due to the change in the exit direction from the internal surface is larger than that due to the shift in the incidence point.

Although the present invention has been described in terms of exemplary embodiments, it is not limited thereto. It should be appreciated that variations or modifications may be made.

## Claims

1. An imaging unit (101) comprising:
a light source (202) to project a light;
an imaging element (200) to receive a light having entered an outer surface of a transparent plate-like member (105) from a predetermined imaging area and transmitted through the transparent plate-like member (105) and a light from the light source (202) reflected by an attached matter (Rd) on the outer surface of the transparent plate-like member (105), to capture an image of the predetermined imaging area and an image of the attached matter (Rd);
**characterized by**:
a mirror module (101 B) fixed on an internal surface of the transparent plate-like member (105) to fixedly support a reflective mirror (203) to reflect the light from the light source (202), the reflective mirror (203) having a mirror surface fixed relative to the transparent plate-like member (105);
an imaging module (101 A) to fixedly support the light source (202) and the imaging element (200), fixed relative to the internal surface of the transparent plate-like member (105) so that the imaging element (200) captures an image in a certain direction; and
a positioning mechanism to determine relative positions of the mirror module (101 B) and the imaging module (101 A).

2. The imaging unit (101) according to claim 1, wherein
the positioning mechanism is a rotational coupling mechanism (101 C) with a rotational shaft orthogonal to an incidence plane of the light reflected by the reflective mirror (203) relative to the internal surface of the transparent plate-like member (105), to couple the mirror module (101 B) and the imaging module (101 A) relatively rotatably around the rotational shaft.

3. The imaging unit (101) according to claim 2, wherein
the rotational coupling mechanism (101 C) is disposed so that the rotational shaft is positioned in a rectangular area having first to third points as apexes on a virtual plane orthogonal to the rotational shaft, the first point (106 A) being one end of a surface of the reflective mirror (203) far from the transparent plate-like member (105), the second point (106 B) being an intersection point of the internal surface of the transparent plate-like member (105) and a normal line (105 N) of the internal surface passing through the first point (106 A), and the third point (106 C) being one of exit points of light from the internal surface of the transparent plate-like member (105) to the imaging element (200) and furthest from the second point (106 B).

4. The imaging unit (101) according to claim 1, wherein:
the imaging element (200) includes an image sensor (206) comprised of two-dimensionally arranged pixel arrays to receive, in different areas, the light from the imaging area having transmitted through the transparent plate-like member (105) and a specular light reflected by the attached matter (Rd) on the outer surface of the transparent plate-like member (105); and
the imaging unit (101) is configured not to allow the specular light reflected by the inner or outer surface of the transparent plate-like member (105) to be incident on the area in which the specular light reflected by the attached matter (Rd) is received, when an inclination angle of the internal surface of the transparent plate-like member (105) is within a predetermined angle range.

5. The imaging unit (101) according to claim 1, wherein
the imaging unit (101) is configured that an incident point of the light reflected by the reflective mirror (203) on the internal surface of the transparent plate-like member (105) is unchanged, when an inclination angle of the internal surface of the transparent plate-like member (105) is within a predetermined angle range.

6. The imaging unit (101) according to claim 1, wherein
the imaging module (101 A) includes an optical path changing element to change a path of the light from the light source (202).

7. The imaging unit (101) according to claim 1, wherein
the reflective mirror (203) is a concave mirror.

8. The imaging unit (101) according to claim 1, wherein
the reflective mirror (203) is a polarization mirror.

9. The imaging unit (101) according to claim 1, further comprising
an optical shield (203 D) in at least one of the mirror module (101 B) and imaging module (101 A) to block a light component from the light source (202) from entering the imaging element (200), the light component causing a noise in at least one of the image of the imaging area and the image of the attached matter (Rd).

10. A method for installing the imaging unit (101) according to claim 1, comprising the step of
fixing the imaging module (101 A) on the internal surface of the transparent plate-like member (105) so that the imaging element (200) captures an image in the certain direction, before or after fixing the mirror module (101 B) on the internal surface.

## Patentansprüche

1. Bilderzeugungseinheit (101), umfassend:
eine Lichtquelle (202) zum Projizieren eines Lichts;
ein Bilderzeugungselement (200) zum Empfangen eines Lichts, das auf eine Außenfläche eines transparenten plattenförmigen Elements (105) von einem festgelegten Bilderzeugungsbereich auftrifft, und das durch das transparente plattenförmige Teil (105) übertragen wird, und eines Lichts von der Lichtquelle (202), reflektiert von einem befestigten Material (Rd) auf der Außenfläche des transparenten plattenförmigen Teils (105), um ein Bild des festgelegten Bilderzeugungsbereichs und ein Bild des befestigten Materials (Rd) einzufangen;
**gekennzeichnet durch**
ein Spiegelmodul (101 B), befestigt auf einer Innenfläche des transparenten plattenförmigen Elements (105), um einen reflektierenden Spiegel (203) fest zu tragen, um das Licht von der Lichtquelle (202) zu reflektieren, wobei der reflektierende Spiegel (203) eine feste Spiegelfläche relativ zum transparenten plattenförmigen Teil (105) hat;
ein Bilderzeugungsmodul (101 A) zum festen Tragen der Lichtquelle (202) und des Bilderzeugungselements (200), befestigt relativ zur Innenfläche des transparenten plattenförmigen Elements (105), sodass das Bilderzeugungselement (200) ein Bild in einer bestimmten Richtung einfängt; und
einen Positionierungsmechanismus zum Bestimmen relativer Positionen des Spiegelmoduls (101 B) und des Bilderzeugungsmoduls (101 A).

2. Bilderzeugungseinheit (101) nach Anspruch 1, wobei
der Positionierungsmechanismus ein Drehkopplungsmechanismus (101 C) mit einem Drehschaft ist, der orthogonal zu einer Einfallebene des Lichts ist, das vom reflektierenden Spiegel (203) relativ zur Innenfläche des transparenten plattenförmigen Teils (105) reflektiert wird, um das Spiegelmodul (101 B) und das Bilderzeugungsmodul (101 A) relativ drehbar um den drehbaren Schaft zu koppeln.

3. Bilderzeugungseinheit (101) nach Anspruch 2, wobei
der Drehkopplungsmechanismus (101 C) so angeordnet ist, dass der Drehschaft in einem rechteckigen Bereich angeordnet ist mit ersten bis dritten Punkten als Scheitelpunkte auf einer virtuellen Ebene orthogonal zum Drehschaft, wobei der erste Punkt (106 A) ein Ende einer Oberfläche des reflektierenden Spiegels (203) in einiger Entfernung vom transparenten plattenförmigen Element (105) ist, wobei der zweite Punkt (106 B) ein Schnittpunkt der Innenfläche des transparenten plattenförmigen Elements (105) und einer normalen Linie (105 N) der Innenfläche ist, die durch den ersten Punkt (106 A) verläuft, und wobei der dritte Punkt (106 C) einer von Austrittspunkten des Lichts von der Innenfläche des transparenten plattenförmigen Elements (105) zum Bilderzeugungselement (200) ist und am weitesten vom zweiten Punkt (106 B) entfernt liegt.

4. Bilderzeugungseinheit (101) nach Anspruch 1, wobei:
das Bilderzeugungselement (200) einen Bildsensor (206) beinhaltet, bestehend aus zweidimensional angeordneten Pixelarrays zum Empfangen (in unterschiedlichen Bereichen) des Lichts vom Bilderzeugungsbereich, das durch das transparente plattenförmige Element (105) übertragen wurde, und eines Reflexionslichts, das vom befestigten Material (Rd) auf der Außenfläche des transparenten plattenförmigen Elements (105) reflektiert wird; und
die Bilderzeugungseinheit (101) konfiguriert ist, nicht zuzulassen, dass das von der Innen- oder Außenfläche des transparenten plattenförmigen Elements (105) reflektierte Reflexionslicht auf den Bereich einfällt, in dem das vom befestigten Material (Rd) reflektierte Reflexionslicht empfangen wird, wenn ein Neigungswinkel der Innenfläche des transparenten plattenförmigen Elements (105) in einem festgelegten Winkelbereich liegt.

5. Bilderzeugungseinheit (101) nach Anspruch 1, wobei:
die Bilderzeugungseinheit (101) so konfiguriert ist, dass ein Einfallspunkt des vom reflektierenden Spiegel (203) reflektierten Lichts auf die Innenfläche des transparenten plattenförmigen Elements (105) unverändert ist, wenn ein Neigungswinkel der Innenfläche des transparenten plattenförmigen Elements (105) in einem festgelegten Winkelbereich liegt.

6. Bilderzeugungseinheit (101) nach Anspruch 1, wobei:
das Bilderzeugungsmodul (101 A) ein Änderungselement für den optischen Pfad zum Ändern eines Pfads des Lichts von der Lichtquelle (202) beinhaltet.

7. Bilderzeugungseinheit (101) nach Anspruch 1, wobei
der reflektierende Spiegel (203) ein konkaver Spiegel ist.

8. Bilderzeugungseinheit (101) nach Anspruch 1, wobei
der reflektierende Spiegel (203) ein Polarisationsspiegel ist.

9. Bilderzeugungseinheit (101) nach Anspruch 1, ferner umfassend:
eine optische Abschirmung (203 D) in mindestens einem des Spiegelmoduls (101 B) und des Bilderzeugungsmoduls (101 A) zum Verhindern des Eintretens einer Lichtkomponente von der Lichtquelle (202) in das Bilderzeugungselement (200), wobei die Lichtkomponente Rauschen in mindestens einem des Bilds des Bilderzeugungsbereichs und des Bilds des befestigten Materials (Rd) bewirkt.

10. Verfahren zum Installieren der Bilderzeugungseinheit (101) nach Anspruch 1, umfassend den Schritt des Befestigens des Bilderzeugungsmoduls (101 A) auf der Innenfläche des transparenten plattenförmigen Elements (105), sodass das Bilderzeugungselement (200) ein Bild in der bestimmten Richtung einfängt, bevor oder nach dem Befestigen des Spiegelmoduls (101 B) auf der Innenfläche.

## Revendications

1. Unité d'imagerie (101) comprenant :
une source lumineuse (202) pour projeter une lumière ;
un élément d'imagerie (200) pour recevoir une lumière étant entrée dans une surface externe d'un élément transparent en forme de plaque (105) provenant d'une zone d'imagerie prédéterminée et transmise par l'élément transparent en forme de plaque (105) et une lumière provenant de la source lumineuse (202) réfléchie par une matière attachée (Rd) à la surface externe de l'élément transparent en forme de plaque (105), pour saisir une image de la zone d'imagerie prédéterminée et une image de la matière attachée (Rd) ;
**caractérisée en ce que** :
un module de miroir (101B) fixé sur une surface interne de l'élément transparent en forme de plaque (105) pour maintenir de manière fixe un miroir réfléchissant (203) afin de réfléchir la lumière provenant de la source lumineuse (202), le miroir réfléchissant (203) ayant une surface de miroir fixe par rapport à l'élément transparent en forme de plaque (105) ;
un module d'imagerie (101A) pour maintenir de manière fixe la source lumineuse (202) et l'élément d'imagerie (200), fixe par rapport à la surface interne de l'élément transparent en forme de plaque (105) de manière à ce que l'élément d'imagerie (200) saisisse une image dans une certaine direction ; et
un mécanisme de positionnement pour déterminer des positions relatives du module de miroir (101B) et du module d'imagerie (101A).

2. Unité d'imagerie (101) selon la revendication 1, dans laquelle
le mécanisme de positionnement est un mécanisme de couplage en rotation (101C) avec un axe rotatif perpendiculaire à un plan d'incidence de la lumière réfléchie par le miroir réfléchissant (203) par rapport à la surface interne de l'élément transparent en forme de plaque (105), pour coupler le module de miroir (101B) et le module d'imagerie (101A) de manière relativement rotative autour de l'axe rotatif.

3. Unité d'imagerie (101) selon la revendication 2, dans laquelle
le mécanisme de couplage en rotation (101C) est disposé de manière à ce que l'axe rotatif soit positionné dans une zone rectangulaire ayant des premier à troisième points constituant des sommets sur un plan virtuel perpendiculaire à l'axe rotatif, le premier point (106A) étant une extrémité d'une surface du miroir réfléchissant (203) éloigné de l'élément transparent en forme de plaque (105), le deuxième point (106B) étant un point d'intersection entre la surface interne de l'élément transparent en forme de plaque (105) et une ligne normale (105N) de la surface interne passant par le premier point (106A), et le troisième point (106C) étant un des points de sortie de la lumière provenant de la surface interne de l'élément transparent en forme de plaque (105) vers l'élément d'imagerie (200) et le plus éloigné du deuxième point (106B).

4. Unité d'imagerie (101) selon la revendication 1, dans laquelle :
l'élément d'imagerie (200) comprend un capteur d'image (206) composé de réseaux de pixels disposés en deux dimensions pour recevoir, dans différentes zones, la lumière provenant de la zone d'imagerie ayant été transmise par l'élément transparent en forme de plaque (105) et une lumière spéculaire réfléchie par la matière attachée (Rd) à la surface externe de l'élément transparent en forme de plaque (105) ; et
l'unité d'imagerie (101) est conçue pour ne pas permettre à la lumière spéculaire réfléchie par la surface interne ou externe de l'élément transparent en forme de plaque (105) d'être incidente à la zone dans laquelle la lumière spéculaire réfléchie par la matière attachée (Rd) est reçue, lorsqu'un angle d'inclinaison de la surface interne de l'élément transparent en forme de plaque (105) se situe dans une plage angulaire prédéterminée.

5. Unité d'imagerie (101) selon la revendication 1, dans laquelle
l'unité d'imagerie (101) est conçue de manière à ce qu'un point incident de la lumière réfléchie par le miroir réfléchissant (203) sur la surface interne de l'élément transparent en forme de plaque (105) est inchangé, lorsqu'un angle d'inclinaison de la surface interne de l'élément transparent en forme de plaque (105) se situe dans une plage angulaire prédéterminée.

6. Unité d'imagerie (101) selon la revendication 1, dans laquelle
le module d'imagerie (101A) comprend un élément de modification de la trajectoire optique pour modifier une trajectoire de la lumière provenant de la source lumineuse (202).

7. Unité d'imagerie (101) selon la revendication 1, dans laquelle le miroir réfléchissant (203) est un miroir concave.

8. Unité d'imagerie (101) selon la revendication 1, dans laquelle le miroir réfléchissant (203) est un miroir de polarisation.

9. Unité d'imagerie (101) selon la revendication 1, comprenant en outre
un blindage optique (203D) dans le module de miroir (101B) et/ou le module d'imagerie (101A) pour empêcher un composant de lumière provenant de la source lumineuse (202) d'entrer dans l'élément d'imagerie (200), le composant de lumière entraînant un bruit dans la zone d'imagerie de l'image et/ou l'image de la matière attachée (Rd).

10. Procédé d'installation de l'unité d'imagerie (101) selon la revendication 1, comprenant l'étape consistant à fixer le module d'imagerie (101A) à la surface interne de l'élément transparent en forme de plaque (105) de manière à ce que l'élément d'imagerie (200) saisisse une image dans une certaine direction, avant ou après avoir fixé le module de miroir (101B) à la surface interne.
